# EUROPEAN PATENT SPECIFICATION

(11) **EP 4 386 508 B1**
(45) Date of publication and mention of the grant of the patent: **05.11.2025**
(21) Application number: 24173372.4
(22) Date of filing: 28.06.2021
(51) Int. Cl.: G05D 1/243, G05D 1/244, G05D 1/229, G05D 1/246, G05D 1/648, G05D 105/15, G05D 107/20, G05D 109/10, G05D 111/10, G05D 111/30, G05D 111/50, G05D 111/67

(54) **AUTONOMOUS MACHINE NAVIGATION USING REFLECTIONS FROM SUBSURFACE OBJECTS**
AUTONOME MASCHINENNAVIGATION UNTER VERWENDUNG VON REFLEXIONEN VON UNTERIRDISCHEN OBJEKTEN
NAVIGATION DE MACHINE AUTONOME À L'AIDE DE RÉFLEXIONS À PARTIR D'OBJETS SOUTERRAINS

(30) Priority: 09.07.2020 US 202063049964 P; 04.12.2020 US 202063121335 P
(43) Date of publication of application: 19.06.2024
(62) Divisional of application: 21745875.1
(73) Proprietor: The Toro Company, Bloomington, MN 55420-1196 (US)
(72) Inventor: FRICK, Alexander, Steven, Bloomington, 55420-1196 (US)
(74) Representative: J A Kemp LLP

(56) References cited:
- WO-A1-2019/068175
- US-A1- 2016 113 195
- US-A1- 2020 050 208

## Description

The present disclosure relates to autonomous machine navigation. In particular, the present disclosure relates to autonomous machine navigation for grounds maintenance machines.

US 2020/050208 A1, WO 2019/068175 A1, and US 2016/113195 A1 disclose background art to the invention.

Grounds maintenance machines, such as lawn and garden machines, are known for performing a variety of tasks. For instance, powered lawn mowers are used by both homeowners and professionals alike to maintain grass areas within a property or yard. Lawn mowers that autonomously perform the grass cutting function are also known. Some lawn mowers will operate in a work region within a predefined boundary. Such lawn mowers may rely upon navigation systems that help the lawn mower autonomously stay within the predefined boundary. For example, some boundaries are defined by wires, which are detected by the mower. The mower navigates by moving randomly within the boundary and redirect its trajectory upon detecting the boundary wire. Using boundary wires may be undesirable for some work regions or some autonomous maintenance tasks. For example, the boundary wire may be costly and cumbersome to install, may break and become inoperable, or may be difficult to move to redefine a desirable boundary for the work region. However, the mobile nature of lawn mowers has limited the available computing resources, such as processing power, memory capabilities, and battery life, available to the lawn mower for other, more sophisticated types of navigation.

### SUMMARY

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes.

Embodiments of the present disclosure relate to navigation for autonomous machines, particularly to autonomously navigate and operate within a boundary of a work region, and even more particularly may be suitable for autonomous machines with limited computing resources. The techniques of the present disclosure provide a robust process for training an autonomous machine for navigation in a work region.

### BRIEF DESCRIPTION OF THE DRAWINGS

Illustrative embodiments will be further described with reference to the figures of the drawing, wherein:
**FIG. 1** is a diagrammatic elevation side view of an autonomous grounds maintenance machine with a vision system including a ground penetrating radar in accordance with one embodiment of the present disclosure.
**FIG. 2A** is a plan view of a work region within a boundary that may be operated within using the machine of **FIG. 1** in accordance with one embodiment of the present disclosure.
**FIG. 2B** is a plan view of a zone within the work region of **FIG. 2A** and an example of pathing of the machine of **FIG. 1** within a boundary defining the zone in accordance with one embodiment of the present disclosure.
**FIG. 3** is a plan view of a work region that includes an exclusion zone and a transit zone that may be operated within using the machine of **FIG. 1** in accordance with one embodiment of the present disclosure.
**FIG. 4** is a schematic representation of various systems of the machine of **FIG. 1** in accordance with one embodiment of the present disclosure.
**FIG. 5** is a schematic representation of various modes of the machine of **FIG. 1** in accordance with one embodiment of the present disclosure.
**FIG. 6** is a schematic representation of sensors providing data to a navigation system that communicates with a platform of the machine of **FIG. 1** in accordance with one embodiment of the present disclosure.
**FIG. 7** is as schematic representation of sensor data input and sensor fusion processing in a sensor fusion module for use with the navigation system of **FIG. 6** in accordance with one embodiment of the present disclosure.
**FIG. 8** is a functional schematic of a vision system during the training mode of **FIG. 5** in accordance with one embodiment of the present disclosure.
**FIG. 9** is a functional schematic of a vision system during the offline mode of **FIG. 5** in accordance with one embodiment of the present disclosure.
**FIG. 10** is a functional schematic of a vision system during the online mode of **FIG. 5** in accordance with one embodiment of the present disclosure.
**FIG. 11** is a diagrammatic illustration of using training images to generate a three-dimensional point cloud for use during the offline mode of **FIG. 5** in accordance with one embodiment of the present disclosure.
**FIG. 12** is a diagrammatic illustration of pose estimates associated with a three-dimensional point cloud generated using the visual map building module of **FIG. 9** in accordance with one embodiment of the present disclosure.
**FIG. 13** is a diagrammatic illustration of pose estimates associated with a low-quality portion of a three-dimensional point cloud for a particular work region in accordance with one embodiment of the present disclosure.
**FIG. 14** is a diagrammatic illustration of pose estimated associated with an updated three-dimensional point cloud for the work region of **FIG. 13** in accordance with one embodiment of the present disclosure.
**FIG. 15** is a schematic representation of a visual map building method for use during the visual map building module of **FIG. 9** in accordance with one embodiment of the present disclosure.
**FIG. 16** is a flow diagram of a training method for training the machine of **FIG. 1** in accordance with one embodiment of the present disclosure.
**FIG. 17** is a flow diagram of an autonomous machine navigation method for operating the machine of **FIG. 1** in accordance with one embodiment of the present disclosure.
**FIG. 18** is a flow diagram of another training method for training the machine of **FIG. 1** in accordance with one embodiment of the present disclosure.
**FIG. 19** is a flow diagram of a touring phase of the training method of **FIG. 18** in accordance with one embodiment of the present disclosure.
**FIG. 20** **is** a flow diagram of a specific method for at least partially carrying out the training method of **FIG. 18** in accordance with one embodiment of the present disclosure.
**FIG. 21** is a perspective illustration of a handle assembly that may be used in the machine of **FIG. 1** in accordance with one embodiment of the present disclosure.
**FIG. 22** is a flow diagram of yet another training method for training the machine of **FIG. 1** in accordance with one embodiment of the present disclosure.
**FIG. 23** is a schematic representation of the base station of **FIG. 3** in accordance with one embodiment of the present disclosure.

### DETAILED DESCRIPTION

Embodiments of the present disclosure provide autonomous machine navigation methods and systems to autonomously navigate and operate within a boundary of a work region, particularly for grounds maintenance, such as lawn mowing. The autonomous machine may be configured in different modes to carry out various navigation functionality, such as training mode, offline mode, and online mode. The autonomous machine may define one or more boundaries of a work region using a vision system and a non-vision-based sensor, for example, instead of using a boundary wire. In some embodiments, the vision system may include a ground-penetrating radar configured to detect underground objects, which may include surface, minimally subsurface, or substantially subsurface objects (e.g., at the ground surface, just below a ground surface, or even further underground, such as 0 cm, 1 cm, 10 cm, 100 cm, or even 1 m under the ground surface). The autonomous machine may correct a position or orientation within the work region, which is determined or estimated using one or more non-vision-based sensors, by using a position or orientation determined the vision system. Training the autonomous machine may be performed during a training mode, which may include one or more phases, such as a touring phase and a mapping phase.

Some aspects described herein relate to defining a boundary of a work region using a vision system and a non-vision-based sensor. Some aspects of the present disclosure relate to correcting an estimated position within the work region using a vision system. The vision system may utilize one or more cameras or one or more ground penetrating radars. In general, cameras may be used to capture above-ground images and ground penetrating radars may be used to capture underground images or other suitable representations of underground structures and objects. Images may be recorded by directing the autonomous machine along a desired boundary path (e.g., during a training mode). Algorithms may be used to extract features, to match features between different images, and to generate a three-dimensional point cloud (3DPC, or 3D point cloud) corresponding to at least the work region (e.g., during an offline mode). A 3DPC may be generated for above-ground features or underground features. Two or more 3DPCs may be generated. For example, a separate 3DPC may be created for each of the above-ground features and the underground features.

Positions and orientations of the autonomous machine during image recording may be determined for various points in the 3DPC, for example, based on the positions of various points in the 3DPC and positions of the corresponding features in the recorded images. Positions and orientations may also be recovered directly during generation of the point cloud. At least the position information may be used to determine a boundary for the work region for subsequent navigation of the autonomous machine in the work region. During operation (e.g., during an online mode), the vision machine may record operational images and determine a vision-based position and orientation of the autonomous machine. The vision-based position may be used to update, or correct errors in, a determined or estimated position based on non-vision-based sensors. Various aspects described herein relate to utilizing limited computing resources while achieving suitable navigation of the work region. The processing of recorded images may occur during an offline mode, for example, when the autonomous machine is charging overnight. The vision system may be used at a low refresh rate to complement a high refresh rate non-vision-based navigation system.

While described herein in illustrative examples as an autonomous mower, such a configuration is illustrative only as systems and methods described herein also have application to other autonomous machines including, for example, commercial mowing products (e.g., riding fairway or greens mowers that are driven by a user), other ground working machines or vehicles (e.g., debris blowers/vacuums, aerators, dethatchers, material spreaders, snow or ice treatment (e.g., snow throwers, plows, salt spreaders, sweepers, ice resurfacers), weeding machines for weed remediation, indoor working vehicles such as vacuums and floor scrubbers/cleaners (e.g., that may encounter obstacles), construction and utility vehicles (e.g., trenchers), observation vehicles, and load transportation (e.g., including people and things, such as people movers and hauling equipment). Furthermore, the autonomous machines described herein may employ various one or more types of navigation, such as random, modified random, or specific path planning, to carry out their intended functionality.

As used herein, the term "pose" refers to a position and an orientation. The pose may be a six-degrees of freedom pose (6DOF pose), which may include all position and orientation parameters for a three-dimensional space. Pose data may include a three-dimensional position and a three-dimensional orientation. For example, the position may include at least one position parameter selected from: an x-axis, a y-axis, and a z-axis coordinate (e.g., using a Cartesian coordinate system). Any suitable angular orientation representations may be used. Non-limiting examples of angular orientation representations include a yaw, pitch, and roll representation, a Rodrigues' representation, a quaternions representation, and a direction cosine matrix (DCM) representation may also be used alone or in combination. In one example, the orientation may include at least one orientation parameter selected from a yaw (e.g., vertical z-axis orientation), a pitch (e.g., a transverse y-axis orientation), and a roll (e.g., a longitudinal x-axis orientation).

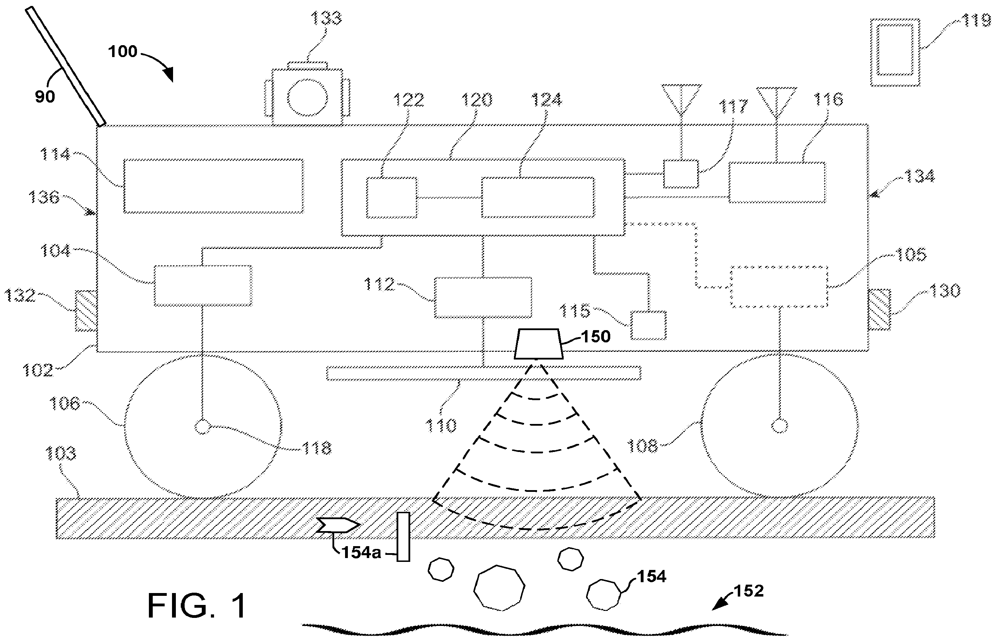

While the construction of the actual grounds maintenance machine is not necessarily central to an understanding of embodiments of this disclosure, **FIG. 1** illustrates one example of an autonomous grounds maintenance machine (e.g., an autonomously operating vehicle, such as an autonomous lawn mower **100**) of a lawn mowing system (for simplicity of description, the mower **100** is illustrated schematically). As shown in this view, the mower **100** may include a housing **102** (e.g., frame or chassis with a shroud) that carries and/or encloses various components of the mower as described below. The mower **100** may further include ground support members, such as wheels, rollers, or tracks. In the illustrated embodiment, ground support members shown includes one or more rear wheels **106** and one or more front wheels **108,** that support the housing **102** upon a ground (grass) surface **103.** As illustrated, the front wheels **108** are used to support a front end portion **134** of the mower housing **102** and the rear wheels **106** are used to support the rear end portion **136** of the mower housing.

One or both rear wheels **106** may be driven by a propulsion system (e.g., including one or more electric wheel motors **104**) to propel the mower **100** over the ground surface **103.** In some embodiments, the front wheels **108** may freely caster relative to the housing **102** (e.g., about vertical axes). In such a configuration, mower direction may be controlled via differential rotation of the two rear wheels **106** in a manner similar to a conventional zero-turn-radius (ZTR) riding mower. That is to say, the propulsion system may include a separate wheel motor **104** for each of a left and right rear wheel **106** so that speed and direction of each rear wheel may be independently controlled. In addition, or alternatively, the front wheels **108** could be actively steerable by the propulsion system (e.g., including one or more steer motors **105**) to assist with control of mower **100** direction, and/or could be driven by the propulsion system (i.e., to provide a front-wheel or all-wheel drive mower).

An implement (e.g., a grass cutting element, such as a blade **110**) may be coupled to a cutting motor **112** (e.g., implement motor) carried by the housing **102.** When the motors **112** and **104** are energized, the mower **100** may be propelled over the ground surface **103** such that vegetation (e.g., grass) over which the mower passes is cut by the blade **110.** While illustrated herein using only a single blade **110** and/or motor **112,** mowers incorporating multiple blades, powered by single or multiple motors, are contemplated within the scope of this disclosure. Moreover, while described herein in the context of one or more conventional "blades," other cutting elements including, for example, disks, nylon string or line elements, knives, cutting reels, etc., are certainly possible without departing from the scope of this disclosure. Still further, embodiments combining various cutting elements, e.g., a rotary blade with an edge-mounted string trimmer, are also contemplated.

As noted above, the autonomous machine **100** may be configured for different applications besides mowing, and therefore outfitted with different implements/tools coupled to the implement motor **112.** For example, for a snow treatment application, the implement motor **112** may drive any combination of plows, blades, augers, impellers, brushes, spreaders, sprayers, etc. The autonomous machine **100** may be a platform that can be manufactured for these various functions and/or may be user-configurable for different functions. As an example of the latter, the blade **110** shown in **FIG. 1** may be part of a removable mower deck that can be replaced by an accessory such as a snow thrower, blower/vacuum, etc. In other embodiments, the motor **112** may have a power take off (PTO) that allows running other implements (e.g., debris collector) together with the blade **110.**

The mower **100** may further include a power source, which in one embodiment, is a battery **114** having a lithium-based chemistry (e.g., lithium-ion). Other embodiments may utilize batteries of other chemistries, or other power source technologies (e.g., solar power, fuel cell, internal combustion engines) altogether, without departing from the scope of this disclosure. It is further noted that, while shown as using independent blade and wheel motors, such a configuration is illustrative only as embodiments wherein blade and wheel power is provided by a single motor are also contemplated.

The mower **100** may further include one or more sensors to provide location data. For instance, some embodiments may include a global positioning system (GPS) receiver **116** (or other position sensor that may provide similar data) that is adapted to estimate a position of the mower **100** within a work region and provide such information to a controller **120** (described below). In other embodiments, one or more of the wheels **106, 108** may include encoders **118** that provide wheel rotation/speed information that may be used to estimate mower position (e.g., based upon an initial start position) within a given work region. The mower **100** may also include a sensor **115** adapted to detect a boundary wire, which could be used in addition to other navigational techniques described herein.

The mower **100** may include one or more front obstacle detection sensors **130** and one or more rear obstacle detection sensors **132,** as well as other sensors, such as side obstacle detection sensors (not shown). The obstacle detection sensors **130, 132** may be used to detect an obstacle in the path of the mower **100** when travelling in a forward or reverse direction, respectively. The mower **100** may be capable of mowing while moving in either direction. As illustrated, the sensors **130, 132** may be located at the front end portion **134** or rear end portion **136** of the mower **100,** respectively.

The sensors **130, 132** may use contact sensing, non-contact sensing, or both types of sensing. For example, both contact and non-contact sensing may be enabled concurrently or only one type of sensing may be used depending on the status of the mower **100** (e.g., within a zone or travelling between zones). One example of contact sensing includes using a contact bumper protruding from the housing **102,** or the housing itself, that can detect when the mower **100** has contacted the obstacle. Non-contact sensors may use acoustic or light waves to detect the obstacle, sometimes at a distance from the mower **100** before contact with the obstacle (e.g., using infrared, radio detection and ranging (radar), light detection and ranging (lidar), sound navigation ranging (sonar), etc.).

The mower **100** may include one or more vision-based sensors to provide localization data, such as position, orientation, or velocity. The vision-based sensors may include one or more cameras **133** that capture or record images for use with a vision system. The vision-based sensors may also include one or more ground penetrating radars **150** that capture or record images, which may be provided to or used by a vision system. The cameras **133** and ground penetrating radars **150** may be described as part of the vision system of the mower **100** or may be logically grouped in different or separate systems of the mower, such as an above ground vision system and an underground imaging system. Types of images include, for example, training images and/or operational images.

The one or more cameras **133** may be capable of detecting visible light, non-visible light (e.g., infrared light), or both. Any suitable total field of view (FOV) may be used. In some embodiments, the one or more cameras **133** may establish a total FOV relative to a horizontal plane greater than or equal to 30, 45, 60, 90, 120, 180, 270, or 360 degrees, around the autonomous machine (e.g., mower **100**)**.** In some embodiments, one or more cameras **133** may establish a total FOV, for example, relative to a horizontal plane less than or equal to 360, 270, 180, 120, 90, 60, 45, or 30 degrees around the autonomous machine. The FOV may be defined in a horizontal direction, a vertical direction, or both directions. For example, a total horizontal FOV may be less than or equal to 360 degrees, and a total vertical FOV may be 45 degrees. In some embodiments, the total FOV may be described in a three-dimensional (3D) geometry, such as steradians. For example, the total FOV may be less than or equal to 4π steradians. The FOV may capture image data above and below the height of the one or more cameras **133.**

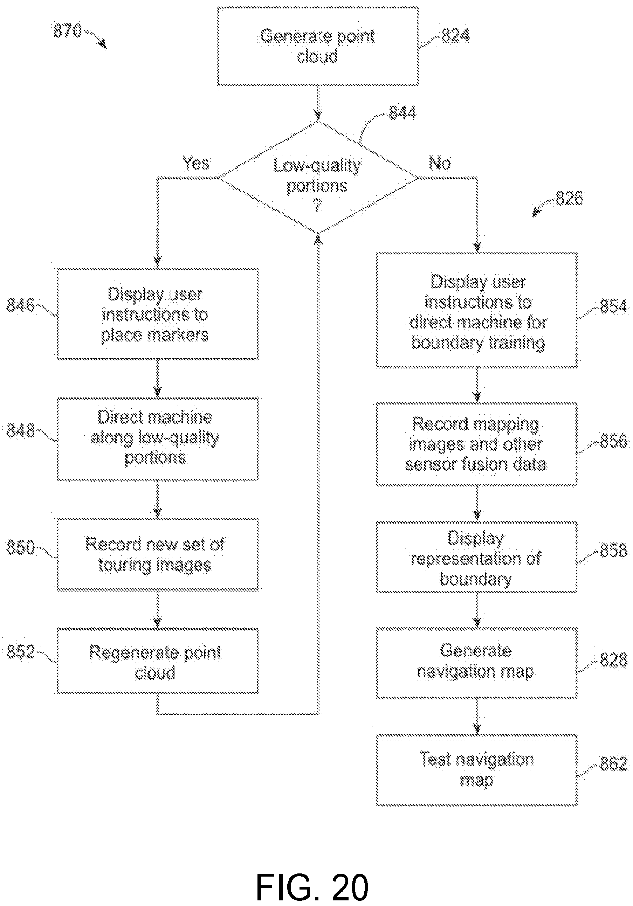

The one or more ground penetrating radars **150** may be capable of generating radar pulses directed at the ground surface **103** to image a subsurface **152** below the ground surface **103.** The subsurface **152** may include various objects, which are depicted as objects **154,** such as underground rocks, boulders, or other geophysical objects. Any suitable ground penetrating radar (GPR) may be used. In some embodiments, electromagnetic radiation in the microwave band of the radio spectrum may be used to generate the radar pulses by the ground penetrating radar **150.** Data from the ground penetrating radar **150** may be used to generate an image of the subsurface **152** including the objects **154.** In other, surface or minimally subsurface markers embodiments (e.g., markers or targets **154a**) may be used and detected as objects **154** as described herein in more detail (see FIG. 20). The ground penetrating radars **150** may also have a frequency band that is suitable penetrate other ground coverings, such as foliage, snow, ice, plastic sheeting, etc.

In some embodiments, the mower **100** includes four cameras **133.** One camera **133** may be oriented in each of one or more of directions including a forward direction, a reverse direction, a first side direction, and a second side direction (e.g., Cardinal directions relative to the mower **100**). One or more camera directions may be positioned orthogonal to one or more other cameras **133** or positioned opposite to at least one other camera **133.** The cameras **133** may also be offset from any of these directions (e.g., at a 45 degree or another non-right angle).

In some embodiments, the mower **100** includes one ground penetrating radar **150.** The ground penetrating radar **150** may be oriented in a downward direction, for example, more than 45 degrees from the forward direction of the mower **100.** In one example, the ground penetrating radar **150** may be oriented at a 90 degree angle from the forward direction of the mower **100.** The one or more ground-penetrating radars **150** may establish a total FOV that fully covers the area under the machine, which may include the use of one or more ground penetrating radars **150.**

The mower **100** may be guided along a path, for example, in a manual manner using handle assembly **90.** In particular, manual direction of the mower **100** may be used during a training mode to learn a work region or a boundary associated with the work region. The handle assembly **90** may extend outward and upward from a rear end portion **136** of the mower **100.**

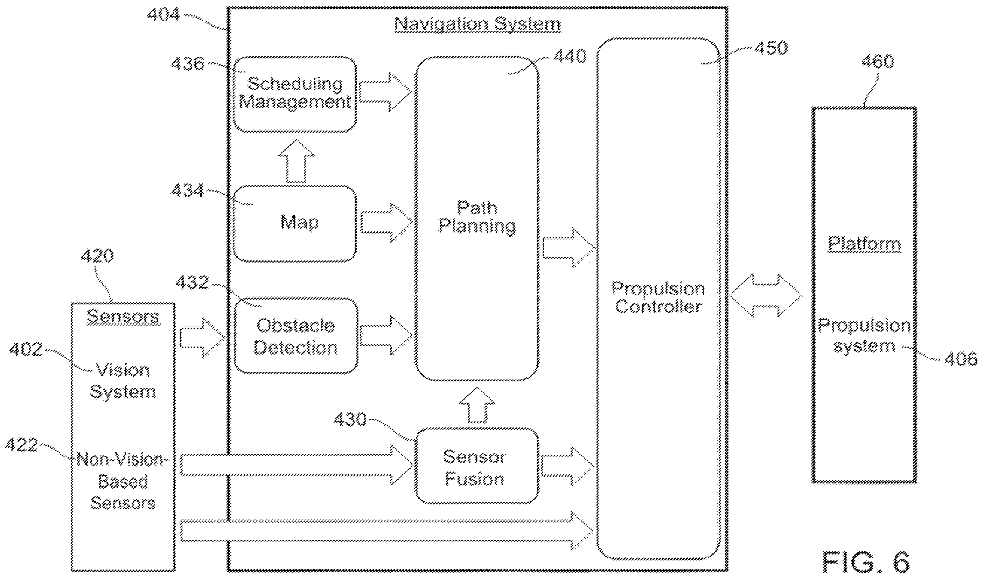

The pose of the autonomous machine may be at least partially determined based on the pose of the camera **133** or the pose of the ground penetrating radar **150.** The pose may be a six-degrees of freedom pose, which may include all position and orientation parameters for a three-dimensional space (see also description related to **FIG. 6**). In some embodiments, the position and orientation of the cameras may be defined relative to a geometric center of the mower **100** or relative to one of the edges of the mower **100.**

Sensors of the mower **100** may also be described as either vision-based sensors and non-vision-based sensors. Vision-based sensors may include cameras **133** and ground penetrating radars **150** that are capable of recording images. The images may be processed and used to build a 3DPC or used for optical odometry (e.g., optical encoding). Non-vision-based sensors may include any sensors that are not cameras **133** or ground penetrating radars **150.** For example, a wheel encoder that uses optical (e.g., photodiode), magnetic, or capacitive sensing to detect wheel revolutions may be described as a non-vision-based sensor that does not utilize a camera. Wheel encoding data from a wheel encoder may be also described as odometry data. In some embodiments, non-vision-based sensors do not include a boundary wire detector. In some embodiments, non-vision-based sensors do not include receiving signals from external system, such as from a GPS satellite or other transceiver.

Optical encoding may be used by taking a series or sequence of images and comparing features in the images to determine or estimate a distance traveled between the images. Optical encoding may be less susceptible to wheel slippage than a wheel encoder for determining distance or speed.

In addition to the sensors described above, other sensors now known or later developed may also be incorporated into the mower **100.**

The mower **100** may also include a controller **120** adapted to monitor and control various mower functions. The controller **120** may include a processor **122** that receives various inputs and executes one or more computer programs or applications stored in memory **124.** The memory **124** may include computer-readable instructions or applications that, when executed, e.g., by the processor **122,** cause the controller **120** to perform various calculations and/or issue commands. That is to say, the processor **122** and memory **124** may together define a computing apparatus operable to process input data and generate the desired output to one or more components/devices. For example, the processor **122** may receive various input data including positional data from the GPS receiver **116** and/or encoders **118** and generate speed and steering angle commands to the one or more wheel motors **104** to cause the drive wheels **106** to rotate (at the same or different speeds and in the same or different directions). In other words, the controller **120** may control the steering angle and speed of the mower **100,** as well as the speed and operation of the cutting blade.

In general, GPS data generated based on data from the GPS receiver **116** (**FIG. 1**) may be used in various ways to facilitate the determining a pose of the mower **100.** In some embodiments, GPS data may be used as one of the non-vision-based sensors to help determine non-vision-based pose data. The non-vision-based pose data may be updated or corrected using vision-based pose data. GPS data may also be used to facilitate updating or correcting an estimated pose, which may be based on non-vision-based pose data and/or vision-based pose data. In some embodiments, the GPS data may be augmented using a GPS-specific correction data, such as real-time kinematics (RTK) data. GPS-RTK data may provide a more accurate or precise location that corrects for anomalies in GPS timing compared to nominal GPS data.

In other embodiments, the non-vision-based pose data may be updated or corrected using pose data that is determined or estimated based on a return signal received in response to a wireless signal transmitted to a surface or subsurface object that passively provides the return signal. The return signal is identifiable with the object and its previously known location, such that the pose data can be used to correct or localize the current pose and to provide an updated pose. Example of a surface or subsurface object includes a radio-frequency identification (RFID) tag; a marker that is visually identifiable via a return signal, e.g., using ground-penetrating radar; an object that has an identifiable signal response to an excitation signal, e.g., reflective radio-frequency response of a metallic object that has an identifiable peak frequency response and/or polarization response.

Reference herein may be made to various parameters, data, or data structures, which may be handled in a controller **120,** for example, by being processed by a processor **122** or stored in or retrieved from a memory **124.** The controller **120** may use the processor **122** and memory **124** in various different systems. In particular, one or more processors **122** and memory **124** may be included in each different system. In some embodiments, the controller **120** may at least partially define a vision system, which may include a processor **122** and memory **124.** The controller **120** may also at least partially define a navigation system, which may include a processor **122** and memory **124** separate from the processor **122** and memory **124** of the vision system.

Each system may also be described as having its own controller **120.** For example, the vision system may be described as including one controller **120** and the navigation system may be described as having another controller **120.** As such, the mower **100** may be described as having multiple controllers **120.** In general, as used herein, the term "controller" may be used to describe components of a "system" that provide commands to control various other components of the system.

In addition, the mower **100** may be in operative communication with a separate device, such as a smartphone or remote computer. A problem area or obstacle may be identified, or defined, using an application on the smartphone or remote computer, or the like. For example, a user may identify a problem area or obstacle on a map of a mowing area. One example of an obstacle is a permanent obstacle, such as a boulder. The mower **100** may receive the identified problem area or obstacle from the separate device. In such cases, the mower **100** may be configured to mow only in a certain direction through the problem area in response to receiving the identified problem area, or the mower may be configured to take proactive evasive maneuvers to avoid running into the obstacle while traversing a slope and may create an exclusion zone around a permanent obstacle in response to receiving the identified obstacle.

In view of the above, it will be readily apparent that the functionality of the controller **120** may be implemented in any manner known to one skilled in the art. For instance, the memory **124** may include any volatile, non-volatile, magnetic, optical, and/or electrical media, such as a random-access memory (RAM), read-only memory (ROM), non-volatile RAM (NVRAM), electrically-erasable programmable ROM (EEPROM), flash memory, and/or any other digital media. While shown as both being incorporated into the controller **120,** the memory **124** and the processor **122** could be contained in separate modules.

The processor **122** may include any one or more of a microprocessor, a controller, a digital signal processor (DSP), an application specific integrated circuit (ASIC), a field-programmable gate array (FPGA), and/or equivalent discrete or integrated logic circuitry. In some embodiments, the processor **122** may include multiple components, such as any combination of one or more microprocessors, one or more controllers, one or more DSPs, one or more ASICs, and/or one or more FPGAs, as well as other discrete or integrated logic circuitry. The functions attributed to the controller **120** and/or processor **122** herein may be embodied as software, firmware, hardware, or any combination of these. Certain functionality of the controller **120** may also be performed in the cloud or other distributed computing systems operably connected to the processor **122.**

In **FIG. 1****,** schematic connections are generally shown between the controller **120** and the battery **114,** one or more wheel motors **104,** blade motor **112,** optional boundary wire sensor **115,** wireless radio **117,** and GPS receiver **116.** This interconnection is illustrative only as the various subsystems of the mower **100** could be connected in most any manner, e.g., directly to one another, wirelessly, via a bus architecture (e.g., controller area network (CAN) bus), or any other connection configuration that permits data and/or power to pass between the various components of the mower. Although connections with some of the sensors **130, 132, 133** are not shown, these sensors and other components of the mower **100** may be connected in a similar manner. The wireless radio **117** may communicate over a cellular or other wide area network (e.g., even over the internet), a local area network (e.g., IEEE 802.11 "Wi-Fi" radio), or a peer-to-peer (P2P) (e.g., BLUETOOTH^{™}) network with a mobile device **119** (e.g., mobile computing device, mobile computer, handheld computing device, smartphone, cellular phone, tablet, desktop, or wearable computer, smartwatch, etc.). In turn, the mobile device **119** may communicate with other devices over similar networks and, for example, may be used to connect the mower **100** to the internet.

In some embodiments, various functionality of the controller or controllers **120** described herein may be offloaded from the mower **100.** For example, recorded images may be transmitted to a remote server (e.g., in the cloud) using the wireless radio **117** and processed or stored. The images stored, or other data derived from processing, may be received using the wireless radio **117** and be stored on, or further processed by, the mower **100.**

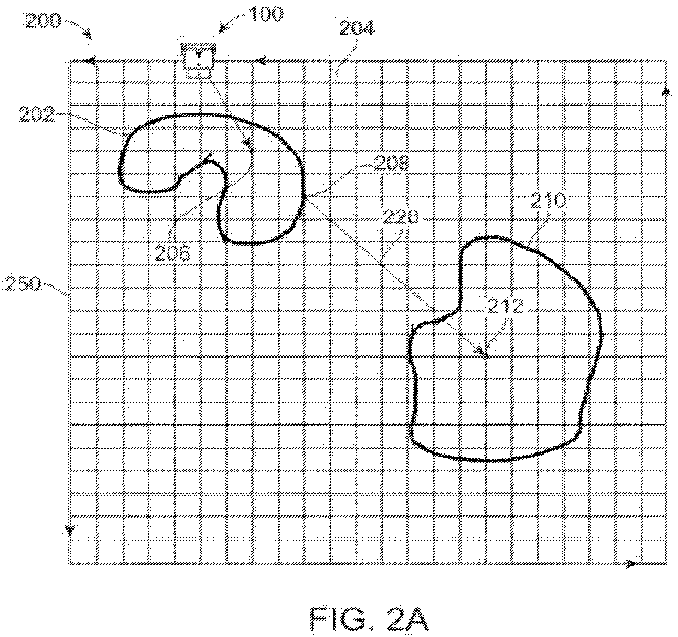

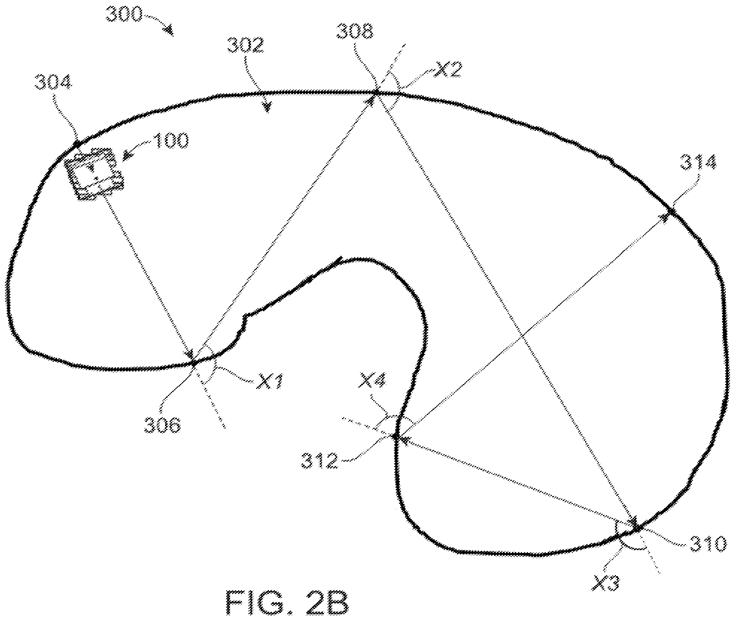

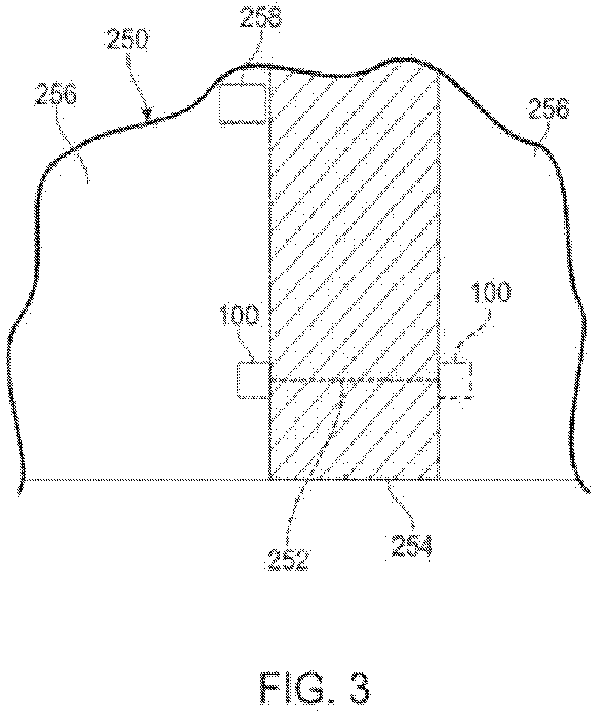

**FIGS. 2** and **3** show a work region **200** or a containment zone **202, 210** within the work region **200.** A boundary may be defined, or determined, around the work region **200.** The mower **100** may cover the work region **200** (e.g., traversed to mow the work region) using various methods. In some embodiments, the mower **100** may traverse random, semi-random, or planned paths within the work region **200.** In some embodiments, other boundaries around the containment zones **202, 210** may be defined within the boundary of the work region **200** depending on the method used to cover the work region **200.** For example, the containment zones **202, 210** may be travelling containment zones or static containment zones.

**FIG. 2A** shows one example of covering a work region **200** with the mower **100** using a plurality of zones **202, 210** (e.g., containment zones). The work region **200** may represent an outdoor area or maintenance area, such as a lawn. The mower **100** may be operated to travel through the work region **200** along a number of paths to sufficiently cut all the grass in the work region **200.** The mower **100** may recharge as needed, for example, when transitioning between zones **202, 210.** A recharging base or base station (similar to **258** at **FIG. 3**) may be located within or along the work region **200.**

A boundary may be used to define the work region **200.** The boundary may be defined manually, or automatically, using a training mode of the mower **100.** In addition, some of the boundary may also be defined using a fixed property boundary or other type of boundary. In some embodiments, the boundary may be defined by directing the mower **100** along the work region **200,** in particular, along a desired boundary path **250** of the work region **200.**

Boundaries may be defined relative to the work region **200** for different purposes. For example, a boundary may be used to define a containment zone, such as for zone **202,** zone **210,** or work region **200.** In general, the mower **100** may be directed to travel within a boundary for a containment zone for a period of time. Another boundary may be used to define an exclusion zone. An exclusion zone may represent an area of the work region **200** for the mower **100** to avoid or travel around. For example, an exclusion zone may contain an obstacle (such as a landscaped garden) or problem area (such as a steep slope). Another boundary may be used to define a transit zone, which may also be described as a transit path. In general, a transit zone is a zone connecting two other zones, such as a path connecting different containment zones. A transit zone may also be defined between a point in the work region and a "home" location or base station. A maintenance task may or may not be performed in the transit zone. For example, the mower **100** may not mow grass in a transit zone. In an example involving a yard divided by a driveway, a transit zone may include the entire driveway, or at least a path across the driveway, between two grassy parts of a lawn for the mower **100** to traverse.

The work region **200** may be mapped with a terrain map. For example, the terrain map may be developed during a teaching mode of the mower, or during subsequent mowing operations. Regardless, the terrain map may contain information about the terrain of the work region **200,** for example, elevation, grade, identified obstacles (e.g., permanent obstacles), identified stuck areas (e.g., areas the mower has gotten stuck whether due to grade or other traction conditions), or other information that may facilitate the ability of the mower **100** to traverse the work region.

The coordinate system **204** is shown for illustrative purposes only. The resolution of points stored in the terrain map may be sufficient to provide useful elevation and/or grade information about the terrain in the work region **200** (e.g., on the order of feet or decimeters). For example, the resolution of points may correspond to spacing between points being less than or equal the width of the mower **100.** In some cases, different functions of path planning may use different levels of resolution. For example, path planning that maps containment or exclusion zones may have the highest resolution (e.g., on the order of centimeters). In other words, the resolution of points proximate to, adjacent to, or near irregular boundaries or obstacles may have a finer granularity.

The mower **100** may start coverage of the work region **200,** e.g., starting at a boundary of the work region. The mower **100** may determine a first zone **202.** The zone **202** may be located adjacent to a boundary of the work region **200** or, as illustrated, may be located further within the work region. In one embodiment, the zone **202** covers the entire work region **200.**

In another embodiment, the zone **202** does not cover the entire work region **200.** When the mower **100** is finished mowing the zone **202,** the mower may start another zone (e.g., zone **210,** which may be dynamic or fixed) to continue mowing.

The mower **100** may determine a starting coordinate **206,** or starting point, within the first zone **202.** For example, the starting coordinate **206** may be selected from the highest elevational point within the zone **202** or somewhere at the edge of the zone **202.** The mower **100** may rotate, if needed, to orient itself toward the starting coordinate **206** from its current position at the boundary of the work region **200.** The mower **100** may propel itself toward the starting coordinate **206.**

After arriving at the starting coordinate **206,** the mower **100** may begin travelling through the zone **202** to cut grass within the zone. As described below, the mower **100** may use randomly-generated destination waypoints within the zone. In addition, or in the alternative, the mower **100** may use a planned pattern with planned waypoints within the zone. Such pattern mowing may use planned waypoint creation to cover the zone.

When the mower **100** arrives at a final destination waypoint **208,** the mower is finished cutting grass within the current zone **202.** The mower **100** may determine a next zone **210** (which may or may not be immediately adjacent to the zone 202) and a next starting point **212** within the next zone. The mower **100** may orient itself and begin travelling to the next starting point **212.** The path **220** from a final destination waypoint **208** in a zone **202** or toward a next starting point **212** in a next zone **210** may be described as a "go to goal" path (e.g., which may traverse a transit zone).

Once the mower **100** arrives at the next starting point **212,** the mower **100** may begin travelling through the next zone **210.** The process of generating and working travelling containment zones may be repeated a number of times to provide sufficient coverage of the work region **200.**

In **FIG. 2B****,** one method **300** of covering a zone **302** is shown as an overhead view illustrating a sequence of paths for taking the mower **100** through at least part of the zone. The path of the mower **100** shown may be applicable, for example, to operation of the mower **100** when a boundary defines a containment zone around zone **302** within the boundary of the work region **200** (**FIG. 2A**).

In the illustrated embodiment, the mower **100** travels from starting point **304** to destination waypoint **306.** After reaching destination waypoint **306,** the mower **100** may determine a second destination waypoint **308,** rotate **X1** degrees, and travel toward the second destination waypoint. This sequence of rotating and travelling may continue to reach third destination waypoint **310,** fourth destination waypoint **312,** and final destination waypoint **314** (e.g., using rotations **X2, X3,** and **X4,** respectively). Although only a few destination waypoints **306, 308, 310, 312, 314** are shown in this illustration, the mower **100** may travel to several more waypoints in order to sufficiently cover the zone **302.** In some embodiments, the mower **100** may select the smallest angle available to rotate and orient itself toward the next destination waypoint (e.g., 90 degrees counterclockwise instead of 270 degrees clockwise).

**FIG. 3** shows one example of a work region **251** including a transit zone **252,** or transit path, extending across an exclusion zone **254,** such as a driveway. The mowing area, or static containment zones **256,** of the work region **251** may be located on each side of the driveway, but no mowing area connects these two sides. To train the transit zone **252,** the mower **100** may first be placed at the desired starting point (see solid line representation of mower **100** in **FIG. 3**). The handle assembly **90** (**FIG. 1**) may be in the manual mode position. The training phase or mode may then be initiated using the mobile device **119** (**FIG. 1**). Once initiated, the mower **100** may be pushed or driven along the desired transit zone **252.** Once the desired path is traversed (see broken line mower **100** in **FIG. 3**), the operator may end the training session and save the transit zone. During autonomous mower operation, the mower **100** will only cross from one side of the driveway, or exclusion zone **254,** to the other using the defined transit zone **252.** Multiple transit zones could be trained across any one exclusion zone.

Once all boundaries (including exclusion zones) and transit zones are taught, a map of the work region may be presented to the user on the mobile device **119** so that the operator can confirm that all boundaries (including exclusion zones) and transit zones are properly accounted for. The operator may then confirm that the boundaries and transit zones are properly represented before autonomous mowing operation may begin. In some embodiments, the operator may be able to delete and/or modify boundaries and transit zones using the mobile device during this review.

Transit zones may be used to define how the mower **100** gets from one portion of the work region to another (or to an isolated second work region). For example, transit zones may be configured to direct the mower: to a particular mowing area; across an exclusion zone such as a sidewalk, patio, or driveway that bifurcates the work region; or through a gate of a fenced yard. The mower will generally not enter into an exclusion zone unless a transit zone is trained through the exclusion zone. Moreover, the mower may not typically mow while moving along some of these transit zones.

Not all exclusion zones may include a transit zone. For example, some exclusion zones may be defined around obstacles that the mower **100** cannot traverse. A transit zone may not be defined across such an exclusion zone.

A base station **258** may be provided and positioned in or near the work region **251.** The base station **258** may be connected to a source of electrical power, which may be stationary or portable. The base station **258** provides a storage location for the mower when not operating, and further includes self-engaging electrical connections to permit the mower to autonomously return to the base station **258** and recharge its battery **114** (**FIG. 1**) when needed.

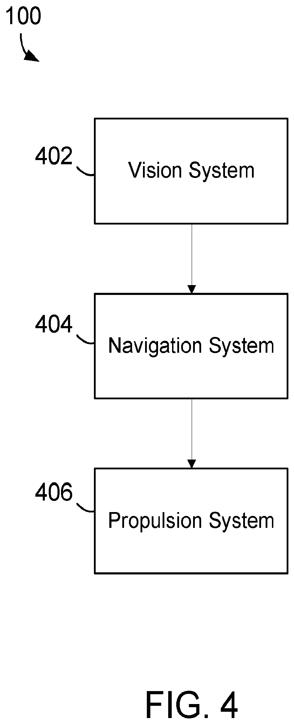

**In** **FIG. 4****,** schematic connections between various systems are shown that may be defined by the mower **100** (**FIGS. 1-3**). A vision system **402** may be operably coupled to a navigation system **404.** The navigation system **404** may be operably coupled to the propulsion system **406.**

The navigation system **404** may record non-vision-based data during a training mode while the vision system **402** records images, such as training images. Although the mower **100** may be directed manually by a user, in some embodiments, the navigation system **404** may autonomously direct the machine during the training mode. The vision system **402** may include one or more cameras or radars to record, or capture, images. In some embodiments, a controller of the vision system **402** may provide position and/or orientation data to the navigation system **404** based on the recorded images, which may be used to facilitate navigation of the mower **100.** For example, the vision system **402** may provide an estimated position and/or orientation of the mower **100** to the navigation system **404** based on vision-based sensor data.

In some embodiments, the navigation system **404** may primarily use a position and/or orientation based on non-vision-based sensor data for navigation. For example, non-vision-based sensor data may be based on an output from an inertial measurement unit or wheel encoder. During a training mode and/or an offline mode, for example, a controller of the navigation system **404** may determine a boundary using non-vision-based sensor data, and the vision-based data, for subsequent navigation of the autonomous machine in the work region. During an online mode, for example, a controller of the navigation system **404** may determine a pose based on vision-based pose data, non-vision-based pose data, or both. In some embodiments, a pose may be determined based on non-vision-based sensor data and update the pose based on the vision-based pose data or other pose data found based on reflections from a passively reflecting object. The navigation system **404** may compare the vision-based position and/or orientation to the non-vision-based position and/or orientation to correct for errors and update the position, which may be described as sensor fusion. In some embodiments, sensor data other than vision-based sensor data may be used to correct for errors and update the position, such as GPS data.

A controller of the navigation system **404** may command the propulsion system **406** based on an updated pose. For example, a corrected or updated position and/or orientation may be used by the navigation system **404** to provide propulsion commands to a propulsion system **406.** The propulsion system **406** (e.g., propulsion hardware) may be defined to include, for example, motors **112, 104** and wheels **106, 108** (**FIG. 1**) and/or any related drivers (e.g., motor controllers or microchips).

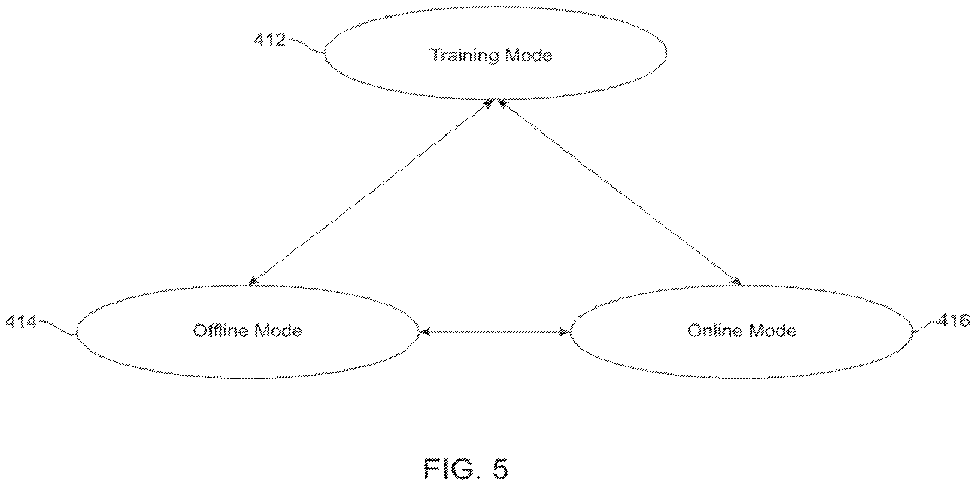

In **FIG. 5****,** schematic modes or states are shown that may be used by the mower **100** (**FIGS. 1-3**). As illustrated, the mower **100** may be configured in a training mode **412,** an offline mode **414,** and an online mode **416.** The mower **100** may switch between the various modes, which may also be described as configurations or states. Some functionality of the mower **100** may be used during certain modes, for example, to optimally utilize computing resources.

As used herein, the term "training mode" refers to a routine or state of an autonomous machine (e.g., mower **100**) for recording data for later or subsequent navigation of the machine in a work region. During the training mode, the machine may traverse the work region without performing maintenance functions. For example, a training mode of an autonomous lawn mower may include directing the mower to traverse along some or all of the work region (e.g., along a desired boundary path), or a zone within the work region (e.g., containment zone or exclusion zone), and may or may not use a mowing blade in the zone or work region. In some cases, the mower may be manually directed using a handle (e.g., handle assembly **90** of **FIG. 1**) in the training mode. In other cases, the mower may be autonomously directed by the navigation system.

As used herein, the term "offline mode" refers to a routine or state of an autonomous machine (e.g., mower **100**) for charging a portable power supply or processing data recorded during an online mode or training mode. For example, an offline mode of an autonomous lawn mower may include docking the mower in a charging station overnight and processing data recorded during a training mode or an online mode.

As used herein, the term "online mode" refers to a routine or state of an autonomous machine (e.g., mower **100**) for operating in a work region, which may include traversing the work region and performing maintenance functions using a maintenance implement. For example, an online mode of an autonomous lawn mower may include directing the mower to cover or traverse the work region, or a zone within the work region, and using a mowing blade in the zone or work region to cut grass.

In general, the mower **100** may interact with the mobile device **119** (**FIG. 1**) during, for example, the training mode **412** and/or the online mode **416.**

In some embodiments, while a user manually directs the mower **100** during the training mode, the mobile device **119** may be used to provide training speed feedback. The feedback may indicate whether the user is moving the autonomous machine too quickly during training using, e.g., a color-coded dashboard.

In some embodiments, the mobile device **119** may be used to inform the user about certain areas, zones, or portions of the work region where the images acquired were not sufficient. For example, an error in a certain area may be detected and the mobile device **119** may inform the user of where the area is and may even direct the user along a path to record additional images to correct the detected error.

In some embodiments, the mobile device **119** may be used to select the type of boundary or zone for training: containment zone, exclusion zone, or transit zone.

In some embodiments, the mobile device **119** may be used to provide real-time zone shape feedback. The zone shape may or may not be tied to a real-world scale and orientation. For example, a map based on sensor data may be used to provide the zone shape feedback to the mobile device **119.**

The mower may provide the time-to-completion estimate via an application running on the mobile device, or via periodic notifications (e.g., text messages) provided to the mobile device.

In **FIG. 6****,** schematic representations of various systems of an autonomous machine (e.g., mower **100** of **FIGS. 1-3**) are shown. Sensors **420** may be operably coupled to the navigation system **404** to provide various sensor data, for example, to be used during an online mode. The vision system **402** (e.g., vision controller) and the navigation system **404** (e.g., navigation controller) may each include its own processor and memory. Various modules of the navigation system **404** are shown to implement various functionality to navigate the autonomous machine. The navigation system **404** may be operably coupled to a platform **460** to control physical actions of the autonomous machine.

The sensors **420** may include sensors associated with the navigation system **404,** vision system **402,** or both. The navigation system **404** and the vision system **402** may both include the same type of sensors. For example, the systems **402, 404** may each include an inertial measurement unit (IMU).

As used herein, the term "platform" refers to structure of the mower (e.g., mower **100** of **FIGS. 1-3**) that support the sensors **420** and the navigation system **404.** For example, the platform **460** may include a propulsion system **406** (e.g., motors and wheels), the housing **102** (**FIG. 1**), the cutting motor **112** (**FIG. 1**), and the maintenance implement **110** (**FIG. 1**), among other possible components. In some embodiments, the entire autonomous machine may be described as being on the platform **460.**

In the illustrated embodiment, the sensors **420** include the vision system **402** and non-vision-based sensors **422.** Sensor data from the sensors **420** may be provided to a sensor fusion module **430.** In particular, the vision system **402** may provide an estimated vision-based pose containing position and orientation parameters to the sensor fusion module **430.** Non-vision-based sensors **422** may include, for example, an IMU and/or a wheel encoder. The sensor fusion module **430** may provide an estimated pose of the autonomous machine based on sensor data from the sensors **420.** In particular, the sensor fusion module **430** may estimate a non-vision-based pose based on data from non-vision based sensors **422,** which may be corrected or updated using a vision-based pose estimate determined based on data from vision-based sensors of the vision system **402.**

A path planning module **440** may receive the estimated pose of the autonomous machine from the sensor fusion module **430** and use the estimated pose for autonomous navigation. Other information, or data, may be received by the path planning module **440** to facilitate navigation. An obstacle detection module **432** may provide information regarding the presence of an obstacle in the work region and the position of the obstacle based on sensor data from the sensors **420.** The navigation system **404** may also define and update a map **434,** or navigation map, of at least the work region. The map **434** may define or be updated to define one or more of containment zones, exclusion zones, transit zones, and mowing history, each of which may be provided to the path planning module **440** to facilitate navigation. Mowing history may also be provided to a scheduling management module **436.** The scheduling management module **436** may be used to inform the path planning module **440** of various tasks for the autonomous machine, such as when to start mowing the work region during the week. Also, the path planning module **440** may perform both global path planning (e.g., determining zones within the work region) and local path planning (e.g., determining waypoints or starting points).

A propulsion controller **450** may receive data from the path planning module **440,** the sensor fusion module **430,** and the sensors **420,** which may be used by the propulsion controller **450** to provide propulsion commands to the propulsion system **406.** For example, the propulsion controller **450** may determine a speed or traction level based on data from the sensors **420.** The path planning module **440** may provide one or more waypoints or starting points to the propulsion controller **450,** which may be used to traverse the some or all the work region. The sensor fusion module **430** may be used to provide rate or speed data, accelerations, positions, and orientations of the autonomous machine to the propulsion controller **450.** The propulsion controller **450** may also determine whether the autonomous machine is traversing the path determined by the path planning module **440** and may facilitate correcting the path of the machine accordingly.

Other information, or data, related to the maintenance functionality of the autonomous machine may be provided to the propulsion controller **450** to control a maintenance implement, such as a cutting blade for mowing. For example, a motor drive current for the cutting blade motor may be provided to the propulsion controller **450.** The propulsion controller **450** may also provide maintenance commands, for example, to control a maintenance implement on the platform **460.**

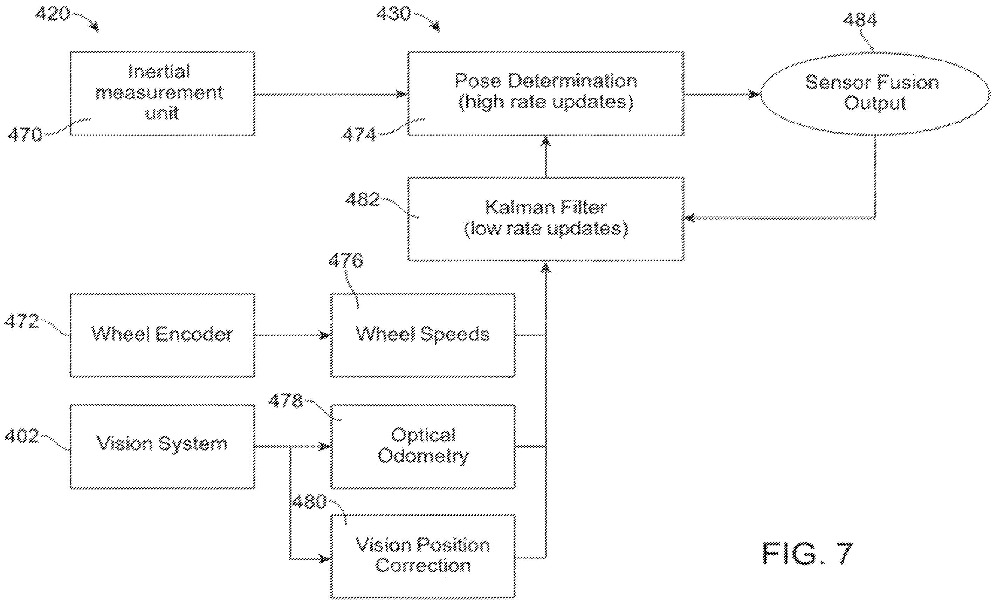

In **FIG. 7****,** shows one example of implementing the sensor fusion module **430** using sensor data from the sensors **420.** Any suitable sensor data from various sensors **420** may be used. As illustrated, the sensors **420** include an inertial measurement unit **470,** a wheel encoder **472,** and the vision system **402.**

Inertial measurement data from the inertial measurement unit **470** may be used by a pose determination module **474.** The pose determination module **474** may provide an estimated pose of the autonomous machine based at least in part of the inertial measurement data. In particular, the pose determination module **474** may provide at least one of an estimated position and orientation. In some embodiments, the pose determination module **474** may even provide one or more velocities (e.g., speed or rate).

A Kalman filter **482** may be used to provide pose estimation data to the pose determination module **474,** which may also be used to provide an estimated pose of the autonomous machine. In particular, the Kalman filter **482** may provide at least one of an estimated delta position, delta velocity, and delta orientation. As used herein, the term "delta" refers to a change in a variable or parameter. In some embodiments, output data from the Kalman filter **482** may be used to correct errors in a pose estimated based on data from the inertial measurement unit **470.** The pose determination module **474** may provide a corrected, or updated, pose in the sensor fusion output **484.**

The Kalman filter **482** may receive information, or data, based on output from the wheel encoder **472** and the vision system **402.** The wheel encoder **472** may provide wheel speeds **476** to the Kalman filter **482.** The vision system **402** may provide optical odometry **478** and vision position correction **480.** Optical odometry **478** may utilize images and determine information about movement of the autonomous machine, such as a distance that the autonomous machine has traveled. In general, optical odometry **478** may be used to determine a change in position, a change in orientation, a linear velocity, an angular velocity, or any combination of these. Any suitable optical odometry algorithms available to one of ordinary skill in the art may be used depending on the particular autonomous machine and application. The vision position correction **480** provided by the vision system **402** may include a vision-based pose data, for example, a vision-based pose estimate.

The pose determination module **474** may receive or process data from the Kalman filter **482** at a low refresh rate and use low rate updates. Data from the inertial measurement unit **470** may be received or processed at a high refresh rate and use high rate updates faster than the Kalman filter data. Output from the sensor fusion output **484** may feed back into the Kalman filter **482** as an input to facilitate Kalman filter operation. In other words, the pose determination module **474** may provide an estimated pose at a higher rate than the output of the Kalman filter **482** or the Kalman filter inputs (wheel speeds **476,** optical odometry **478,** or vision position correction **480**). For example, the vision position correction **480** may be performed at various rates on the order of one to four times per minute (e.g., about 1/10 Hz or 1/100 Hz), whereas the pose determination module **474** may provide a pose on the order of 6000 times per minute (e.g., about 100 Hz). In some embodiments, the higher rate may be an order of magnitude that is one, two, three, four, five, or even six times the lower rate.

In some embodiments (not shown), the Kalman filter **482** may be included in the pose determination module **474.** In some embodiments, the Kalman filter **482** may use a high refresh rate.

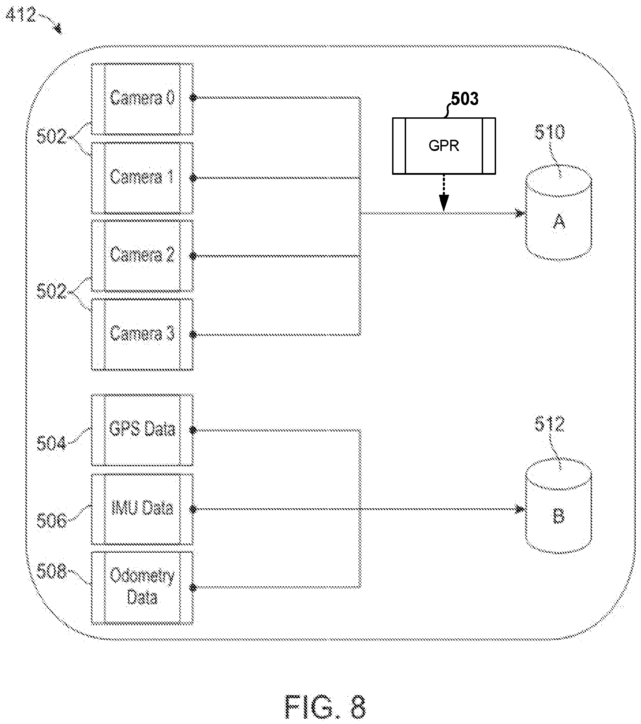

In **FIG. 8****,** schematic representations of various data and data structures that may be used by a vision system (e.g., vision system **402** of **FIG. 4**) in one example of a training mode **412** for recording data are shown. In general, during training mode, data is recorded while the autonomous machine is directed along a work region, for example, along a desired boundary of the work region). In particular, training images may be recorded while the autonomous machine is directed along the work region.

During training mode, camera data **502** from one or more cameras (e.g., cameras **133** of **FIG. 1** that may include a forward-facing, rearward-facing, left-racing, and right-facing camera) may be provided to and stored in a data structure **510** as training images. Alternatively, or additionally, GPR data **503** from one or more ground penetrating radars (e.g., ground penetrating radar **150** of **FIG. 1**) may be provided and stored in the data structure **510.** Although camera data **502** from four cameras and GPR data **503** from one ground penetrating radar are shown, data from any number of cameras and radars may be used. The camera data **502** and GPR data **503** may include images, which may be described as image data or timestamped image data. The camera data **502** and the GPR data **503** may be described as vision-based data.

Also, during training mode, non-vision-based data may also be recorded. In the illustrated embodiment, the non-vision-based data includes GPS data **504,** IMU data **506,** and odometry data **508** (e.g., wheel encoder data). The non-vision-based data may be provided to and stored in a data structure **512.** The non-vision-based data may include timestamped non-vision-based data. Any combination of non-vision-based data may be used. In some embodiments, non-vision-based data is optional and may not be used by the vision system.

While the vision system records data, the navigation system of the autonomous machine may be utilized to observe and define boundaries for containment, exclusion, and transit zones. The boundaries may be stored in the navigation system for subsequent navigation during an online mode.

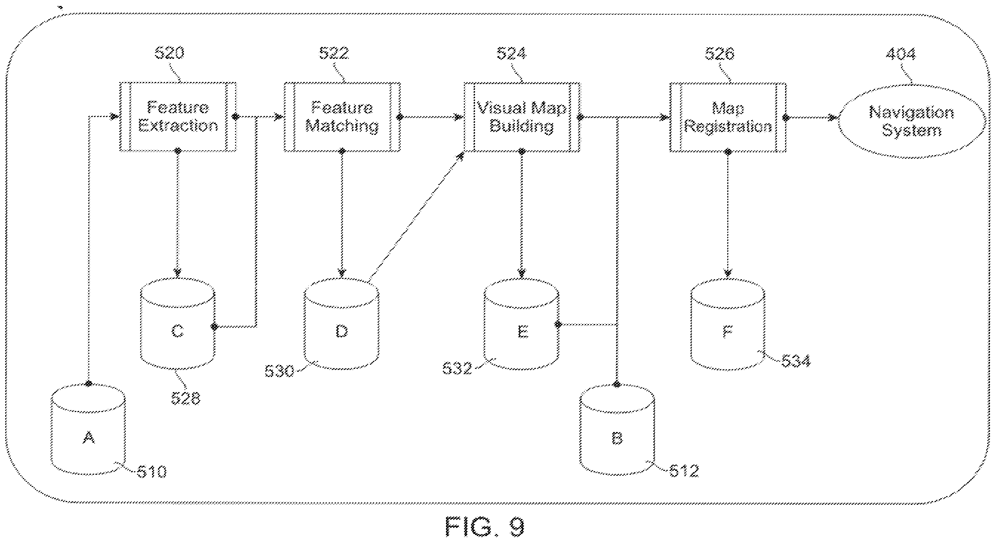

In **FIG. 9****,** schematic representations of various data, data structures, and modules of the vision system in one example of an offline mode **414** for processing data are shown. The offline mode **414** may be used subsequent to a training mode **412** (**FIG. 5**). The camera data **502** or GPR data **503,** which may have been stored in data structure **510** as training images during a training mode, may be provided to feature extraction module **520.** The feature extraction module **520** may utilize a feature extraction algorithm, a descriptor algorithm, or both to extract feature data that is provided to and stored in a data structure **528** based on results of the feature extraction or description algorithm. In general, training images may be matched with data only from the same source, such as matching images from the camera data **502** or matching images from the GPR data **503.**

As used herein, the term "feature" refers to two-dimensional (2D) data that results from identifying one or more points, in particular key points or points of interest, in a two-dimensional image. Features may be identified in and extracted from an image using a feature detector algorithm. Any suitable feature detector algorithm available to one having ordinary skill in the art may be used depending on the particular autonomous machine and application. In some embodiments, each unique feature refers to only one point, or point of interest, in an image or 3DPC. The feature may be stored as feature data containing coordinates defined relative to the image frame. In some embodiments, feature data may also include a descriptor applied to, associated with, or corresponding to the feature. The term "feature data" refers to a data structure that represents features and may include a two-dimensional position and a multi-dimensional descriptor (e.g., two-dimensional or three-dimensional).

Key points used to identify features may be extracted from various objects in an image. In some embodiments, the objects may be permanent, temporary, or both. In some embodiments, the objects may be natural, artificial, or both. One example of a permanent feature is a corner of a house. One example of a natural feature is an edge of a tree trunk. Some examples of temporary and artificial features include a stake in the ground and a target on a tree. The artificial feature may be temporarily placed and used to increase feature density within a work region (e.g., to improve a low-quality portion of a 3DPC) above ground or underground. The artificial feature may be powered. In one example, the artificial feature may include a light emitter for visible or non-visible light detectable by a camera or radar. The artificial feature may be unpowered and, for example, may include a visible or non-visible pattern detectable by a camera or a radar. Some artificial features may be permanently placed.

As used herein, the term "non-visible" refers to emitting or reflecting wavelengths of light that are not visible to the human eye, but which may emit or reflect wavelengths visible by a camera or radar, such as an infrared camera on the autonomous machine or microwave ground penetrating radar.

As used herein, the term "descriptor" refers to two-dimensional data that results from a descriptor algorithm. The descriptor describes the feature in the context of the image. In some embodiments, a descriptor may describe pixel values, image gradients, scale-space information, or other data in the image near or around the feature. For example, the descriptor may include an orientation vector for the feature or may include a patch of image. Any suitable descriptor algorithm for providing context for a feature in an image that is available to one having ordinary skill in the art may be used depending on the particular autonomous machine or application. A descriptor may be stored as part of feature data.

Techniques described herein for feature detection, descriptors, feature matching, or visual map building may include or utilize algorithms, such as a Scale Invariant Feature Transform (SIFT), Speeded Up Robust Features (SURF), Oriented FAST and Rotated Brief (ORB), KAZE, Accelerated-KAZE (AKAZE), linear feature tracking, camera merging, loop closure, incremental structure from motion, or other suitable algorithms. Such algorithms may, for example, provide one or more features and descriptors to the feature matching module **522** and visual map building module **524** described below. In some embodiments, the visual map building module **524** may also be described as an underground map building module when GPR data is used.

The output of the feature extraction module **520** and/or the feature data stored in a data structure **528** may be provided to feature matching module **522.** The feature matching module **522** may utilize a feature matching algorithm to match features identified in different training images. Different images may have different lighting around the same physical key points, which may lead to some differences in the descriptors for the same features. Features having a similarity above a threshold may be determined to be the same feature.

Any suitable feature matching algorithm available to one of ordinary skill in the art may be used depending on the particular autonomous machine and application. Non-limiting examples of suitable algorithms include Brute-Force, Approximate Nearest Neighbor (ANN), and Fast Library for Approximate Nearest Neighbor (FLANN). The Brute-Force algorithm may match features by selecting one feature and checking all other features for a match. The feature matching module **522** may provide and store matching data in a data structure **530** based on the results of the feature matching algorithm.

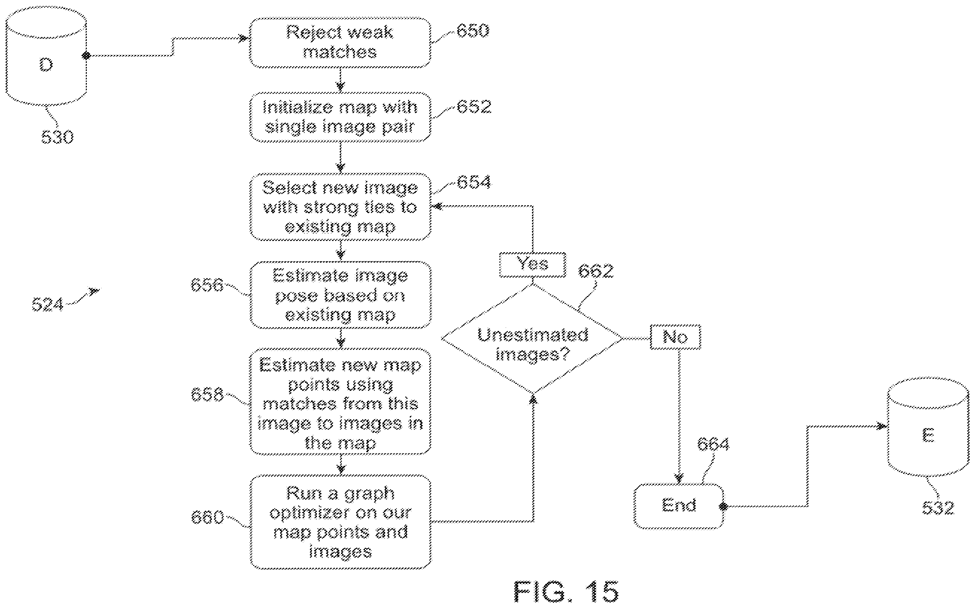

The output of the feature matching module **522** and/or the matching data stored in the data structure **530** may be provided to a visual map building module **524.** The visual map building module **524** may utilize a map building technique, such as the method shown in **FIG. 15****,** to create a 3DPC. In general, the techniques described herein that generate a 3DPC using vision-based sensors may be described as a Structure from Motion (SfM) technique or Simultaneous Localization and Mapping (SLAM) technique, either of which may be used with various embodiments of the present disclosure, for example, depending on the particular autonomous machine and application.

As used herein, the term "three-dimensional point cloud," "3D point cloud," or "3DPC" is a data structure that represents or contains three-dimensional geometric points which correspond to features extracted from images. The 3DPC may be associated with various properties, such as poses. In some embodiments, the geometric points and poses may or may not be defined in a coordinate system based on an arbitrary frame of reference. In some embodiments, the 3DPC may or may not be associated with a scale, orientation, or both that is tied to the real-world, for example, until a map registration process has been performed. The 3DPC may be generated based on feature matching data. A graph, or visual map, may be generated based on the 3DPC to provide a human-viewable representation of the 3DPC.

In some embodiments, visual map building module **524** may establish correspondences between 3D points and 2D features, even if the 2D-to-2D correspondences from the feature matching module **522** have not been established. In other words, the visual map building module **524** may not require that all features be matched before beginning the visual map building process.

Other data may be associated with the points of the 3DPC. Non-limiting examples of data that may be associated with each point in the 3DPC includes: one or more images, one or more descriptors, one or more poses, position uncertainty, and pose uncertainty for one or more poses. The 3DPC and associated data may be provided to and stored in a data structure **532.**

In some embodiments, associated data may include one or more poses determined and associated with points in the 3DPC as pose data, which may describe the position and/or orientation of the platform or some other component of the system at the times when the features associated with the 3DPC were observed. For example, positions and orientations of the autonomous machine during image recording may be determined based on the positions of various points in the 3DPC and positions of the corresponding features in the recorded images. Positions and orientations, or poses, may also be determined directly during generation of the point cloud. The position, orientation, or both types of data represented in the poses may be used for boundary determination or pose correction by the navigation system.

The output of the visual map building module **524** and/or the 3DPC and associated data stored in the data structure **532,** which may include a plurality of 6DOF poses, the 3DPC, and a plurality of boundary points in a visual map or navigation map, may be provided to a map registration module **526.** Optionally, the non-vision-based data, such as GPS data, IMU data, and odometry data, from the data structure **512** may also be provided to the map registration module **526.** The map registration module **526** may determine and provide pose data based on a registered map, which may be provided to and used by the navigation system **404.** In some embodiments, pose data is provided from the map registration module **526** to the navigation system **404.** The pose data may be estimated vision-based pose data. The registered map may also be provided to and stored in a data structure **534.**

As used herein, the term "registered map" refers to a 3DPC that has been tied to a real-world scale, real-world orientation, or both. In some embodiments, a registered map may be tied to a real-world map or frame of reference. For example, a GPS may be used to tie the 3DPC to a real-world mapping service, such as GOOGLE MAPS^{™}. In some embodiments, when using techniques described herein, the 3DPC may generally be scaled from about 0.5 times up to about 2 times when registered to a real-world map or frame of reference. However, scaling is generally not limited to these ranges.

As used herein, the term "real-world" refers to the Earth or other existing frames of reference for a work region. A non-real-world frame of reference may be described as an arbitrary frame of reference.

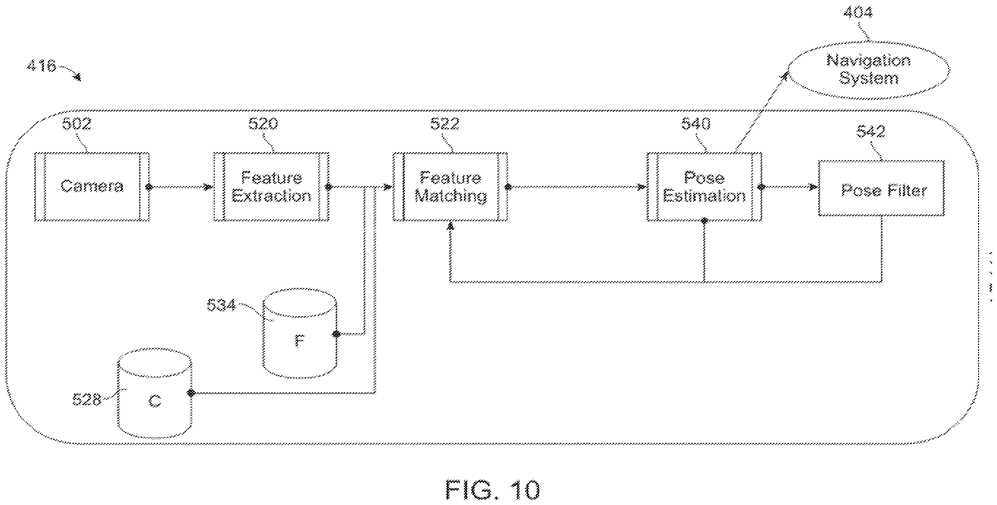

In **FIG. 10****,** schematic representations of various data, data structures, and modules of the vision system in one example of an online mode **416** for pose estimation are shown. The online mode **416** may be used subsequent to a training mode **412,** subsequent to an offline mode **414,** or both. Instead of capturing images for training, image data in the camera data **502** or the GPR data **503** may be used during operation. Such image data may be described as operational image data including operational images.

The operational images in the camera data **502** or the GPR data **503** may be provided to the feature extraction module **520.** The same or different algorithms to extract feature data from training images used during the offline mode **414** may be used on operational images in the online mode **416.**

The feature data from the feature extraction module **520** may be provided to the feature matching module **522.** The feature matching module **522** may use the same or different algorithms used during the offline mode **414** to match feature data from feature extraction module **520** with features in registered map data from the data structure **534.** In some embodiments, feature data from the data structure **528** may also be used as an input to the feature matching module **522.** The feature matching module **522** may match features using 2D correspondences, 3D correspondences, correspondences between 2D image positions and 2D projections of 3D data, descriptor values, or any combination of these. The matching data from the feature matching module **522,** which may include 2D or 3D correspondences, may be provided to a pose estimation module **540.**

The pose estimation module **540** may provide an estimated pose, such as a 6DOF pose, and may be described as vision-based pose. Vision-based pose data from the pose estimation module **540** may be provided to the navigation system **404,** a pose filter **542,** back to feature matching module **522,** or any combination of these.

The pose data may be used by the feature matching module **522** to identify which features are likely to be seen in the camera data **502** or GPR data **503** based on the estimated pose of the autonomous machine and the locations at which these features are likely to be seen. This information may be used as an input into one or more algorithms of the feature matching module **522.**

The pose filter **542** may use pose data to identify which poses are likely and provide filtered pose data. The filtered pose data from the pose filter **542** may be provided back to the feature matching module **522** to identify, for example, certain scenes among the possible scenes based on the filtered pose data for feature matching with features in the captured images, which may facilitate faster overall feature matching. The filtered pose data from the pose filter **542** may be provided to the pose estimation module **540** to identify, for example, certain poses among the possible poses based on the filtered pose data, which may facilitate faster pose estimation.

In some embodiments, the pose filter **542** may use prior pose estimates information from other sensors, such as an IMU, wheel encoder, GPS, or optical encoder (e.g., sensors of **FIG. 1** or sensors **420** of **FIGS. 6-7**) to filter poses. The navigation system **404** of **FIG. 4** may use an independent pose filter. The resulting output, or pose data, from the different pose filters may be compared for correction of, or as a redundancy check on, either output. In some aspects, the pose filter **542** may select particular scenes in the navigation map (e.g., less than all the scenes in the navigation map) for feature matching with the features extracted from the lowlight image. Using the pose filter **542** may facilitate faster vision-based pose estimation, or localization.

In addition, the feature matching module **522** may use feature data, which may include features and/or descriptors, from the data structure **528** to filter out feature data from the feature extraction module **520** that are not similar to any features already extracted during a training mode.

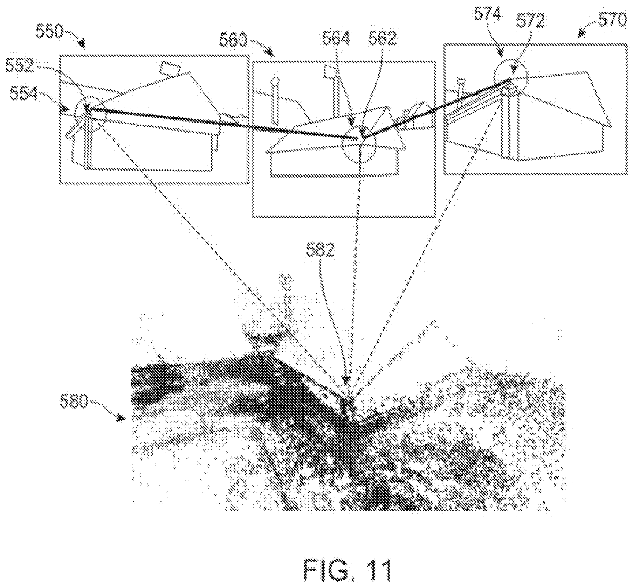

In **FIGS. 11-14****,** the 3DPC is generated using camera data **502.** In other embodiments (not shown), the 3DPC may be additionally or alternatively generated based on GPR data **503.**

In **FIG. 11****,** a series of timestamped images **550, 560, 570** and a 3DPC **580** are shown to illustrate one example of visual map building. A key point may be identified as a two-dimensional feature **552, 562, 572** in the respective image **550, 560, 570,** for example, using a feature detector algorithm.

Each feature **552, 562, 572** is extracted and a descriptor algorithm may be applied to generate a multi-dimensional descriptor **554, 564, 574** associated with the respective feature **552, 562, 572.** The descriptors **554, 564, 574** are illustrated as circles around the respective feature **552, 562, 572.** The features **552, 562, 572** and the descriptors **554, 564, 574** may be included in feature data.

During feature matching, a feature matching algorithm may be used to determine that the features **552, 562, 572** are sufficiently similar based on the descriptors **554, 564, 574.** The features may be matched in matching data.

During visual map building, a map building technique may be applied to the feature data and the matching data to identify a three-dimensional point **582** in a 3DPC **580** that corresponds to the features **552, 562, 572.** Each point of the 3DPC **580** may be determined in a similar manner.

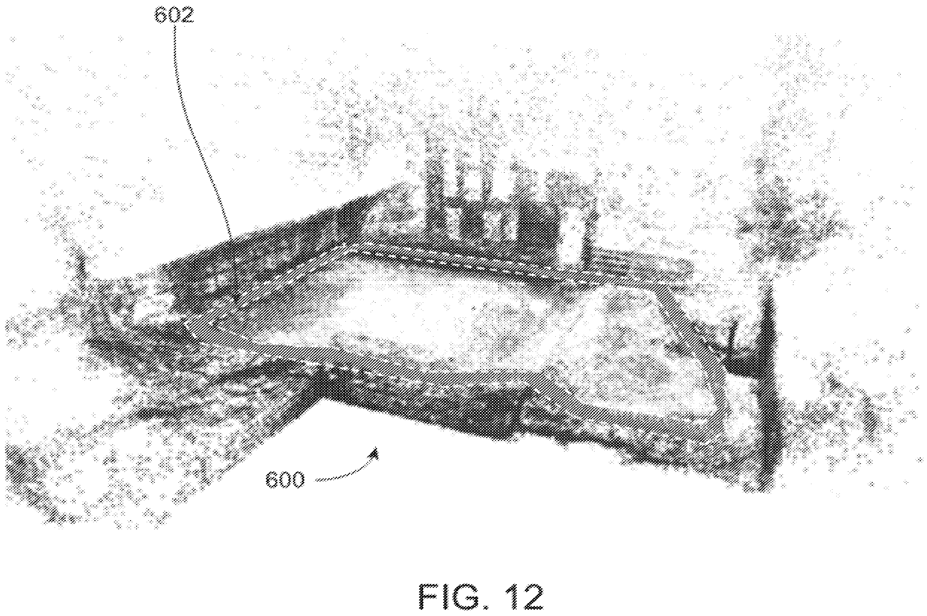

In **FIG. 12****,** a 3DPC **600** is shown with pose points **602.** In the illustration, the pose points are drawn as red dots that appear to form a path, which is roughly outlined using a white dashed line for visibility. The path may be described as a path around a perimeter of the work region. Points corresponding to feature positions are drawn as black dots. During visual map building, pose points **602** may be determined along with the points corresponding to feature positions. Each pose point **602** corresponds to an estimated pose of the camera or radar used to record one image. Each pose point **602** may be included in pose data provided to the navigation system, which may be used in boundary determination or pose correction.

The boundary may be defined using a line or curve fit of the pose points **602.** The boundary may also be defined relative to the line fit, curve fit, or the pose points **602.** For example, the boundary may be defined one foot outside of the line fit, curve fit, or the pose points **602.**

The quality of the 3DPC **600** may be evaluated. A quality level, or parameter, may also be assigned to various portions of the 3DPC **600.** The quality level used to evaluate the 3DPC may be based on various parameters, such as at least one of: a number of poses reconstructed, a number of points reconstructed, reprojection error, point triangulation uncertainty, and reconstructed pose uncertainty.

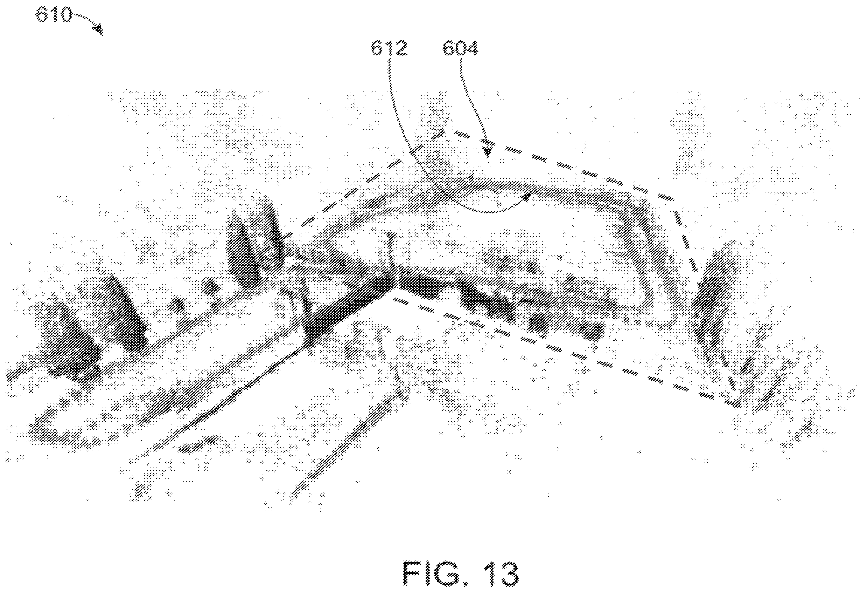

In **FIG. 13****,** a 3DPC **610** is shown with pose points **612** and a low-quality portion **604** of the 3DPC. An autonomous machine may be directed along the path represented by the pose points **612.** The path may be described as a path around a perimeter of the work region. One or more portions **604** of the 3DPC **600** may be identified as, or determined to be, a low-quality portion **604.** For example, a portion of the 3DPC may be determined to have a quality level below a quality threshold. The quality level may be based on, for example, uncertainty values associated with points, uncertainty in the poses corresponding to those points, or a low density of points. For example, as the autonomous machine is directed along a path during training mode, certain areas of the work region may have very few key points visible to the one or more camera or radars for identifying features (e.g., being near an open field) or the path may be so close to an obstacle such that key points just above or behind the obstacle are not visible from the path (e.g., being near a fence that obstructs the view of a tree beyond or above the fence due to a limited vertical FOV).

It may be desirable to improve the quality level of this portion of the 3DPC. Coordinates or points associated with the low-quality portion may be provided to the navigation system. The navigation system may direct the autonomous machine to traverse the work region to record additional training images, for example, along a different, or secondary, path than the original desired boundary path that is likely to record additional images of key points that may be in the low-quality portion. The navigation system may direct the autonomous machine along the secondary path, for example, during a training mode or online mode. In other words, the autonomous machine may be directed to record images in an area of the work region associated with the low-quality portion of the 3DPC, which may be used to improve the quality of, or "fill in," this portion of the 3DPC.

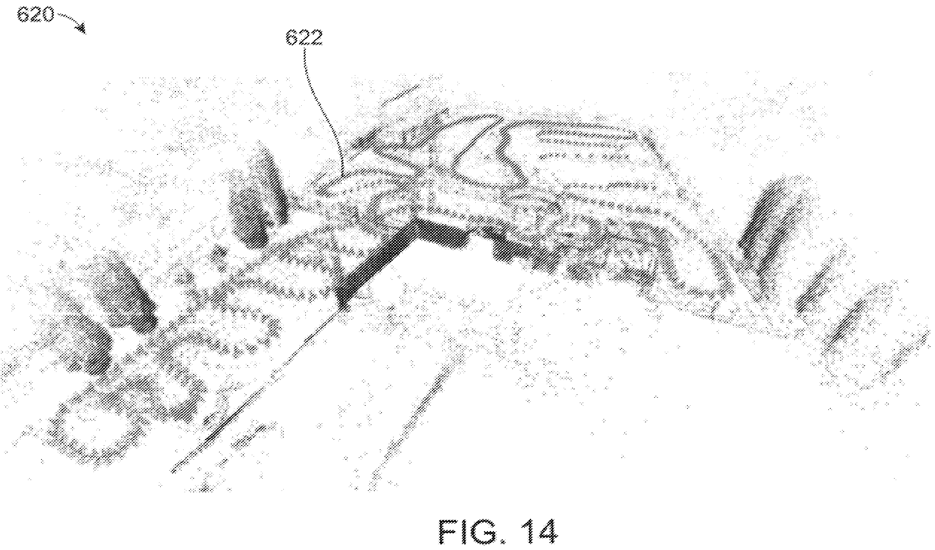

In **FIG. 14****,** a 3DPC **620** is shown that represents the same work region as 3DPC **610** (**FIG. 13**). However, the autonomous machine was directed along a path represented by pose points **622** to record images for generating the 3DPC **620.** As illustrated, the 3DPC **622** does not include a low-quality portion. The path may be described as a secondary path. The secondary path may be defined within a boundary, or original path, represented by pose points **612** (**FIG. 13**). The secondary path pay may be described as traversing along an interior of the work region. The secondary path may include more turns, or "zig-zag" paths, through the work region to capture more points of view from the one or more cameras or radars on the autonomous machine. Any type of changes may be made to the path, such as random, semi-random, or planned path changes, to determine the secondary path. When a secondary path represented by pose points **622** is used for filling in the 3DPC **620,** the original path represented by pose points **612** may still be used as the boundary that defines the work region.

In some embodiments, GPS data, such as GPS-RTK data, may be used to help navigate the autonomous machine through areas of the work region associated with low-quality portions of the 3DPC. For GPS data may be provided to a sensor fusion module as one of the non-vision-based sensors. In one example, the autonomous machine may rely more on GPS data when the autonomous machine is traversing an area associated with low-quality portions of the 3DPC. When relying more on GPS data, the GPS data may be "weighted" more heavily than vision-based data. The GPS data may be used for pose correction or even as a primary non-vision-based sensor input to sensor fusion. The autonomous machine may "weight" vision-based data more heavily than GPS data, for example, when the autonomous machine is traversing an area of the work region that contains one or more obstacles that may hinder the GPS receiver **116** (**FIG. 1**) from receiving appropriately timed signals from GPS satellites. The autonomous machine may also "weight" vision-based data more heavily, for example, when the autonomous machine is traversing an area of the work region that is not associated with low-quality portion of the 3DPC.

In **FIG. 15****,** a flowchart of one example of a visual map building method used by the visual map building module **524** is shown. The method illustrated in **FIG. 15** may be used to build maps from camera data **502,** which may be used to adjust for moving objects over time (e.g., the presence of a vehicle or person). The method may also be used to build maps from GPR data **503,** which may be used to adjust for moving objects when subsurface objects may shift, for example, due to seasonal thawing and melting. In general, the movement of subsurface objects will be less than the movement of above ground objects.

At the end **664** of visual map building, a 3DPC may be stored in the data structure **532.** In general, the visual map building method may employ removing extraneous points that may confuse various map building algorithms. For example, weak matches or points associated with high uncertainty values may be removed from data before certain map building algorithms are used to generate the 3DPC. A plurality of 6DOF poses and a plurality of boundary points determined based on the plurality of 6DOF poses may be stored in the data structure **532.**

Weak matches may be rejected from matching data from the data structure at **650.** In particular, matches below a matching threshold in the matching data may be rejected and not used to generate the 3DPC. A weak match may be defined as two features having similar descriptors, such that they are matched using a matching algorithm. However, the features may be in different locations in the work region. Any suitable algorithm available to one with ordinary skill in the art may be used to filter out such weak matches. Some algorithms provide relative or scaled feedback. For example, the result of a ratio test may represent the probability of a good match. A threshold may be used to determine whether the result of the ratio test does not meet or exceeds such a matching threshold. One or more of these tests may be used to determine whether a match is weak. In some embodiments, a weak match may be determined by layering tests and determining whether an overall probability does not meet or exceeds a matching threshold.

A partial 3DPC may be initialized using data based on first and second training images at **652** (e.g., any pair of images). In particular, the partial 3DPC may be initialized using feature data corresponding to a first and a second training image. The feature data may include features and descriptors. The training images may be selected to be sufficiently spaced apart in the work region in distance or time, which may be considered a surrogate for distance as the autonomous machine traverses the work region. The training images may also be selected so that a sufficient number of features are visible in both images. In some embodiments, the first two training images are selected so that one, two, three, or more features are shared between the training images such that the number of shared features exceeds a threshold number of features, and also, the training images are not immediately subsequent recorded images such that the training images are spaced in distance, time, or number of images away by some threshold number (e.g., one, two, three, or more images were recorded in-between).

A third training image with overlapping correspondence to the partial 3DPC is selected at **654.** In particular, a third training image may be selected with overlapping correspondence with the partial 3DPC.

The third training image may be selected to corroborate the points identified in the existing partial 3DPC based on the first two images. The overlapping correspondence may be evaluated to determine whether the third training image has a strong tie to the existing partial 3DPC. In other words, the third training image may be selected so that some number exceeding a threshold number of features are shared among the images and that the third training image is spaced some distance, time, or number of images away from the first and second training images by some threshold number.

In general, if three images each have one or more points in common (e.g., a sufficient number of points in common), then the points may be matched within a three-dimensional space. Also, in general, a camera- or radar-based pose may be determined under these same conditions. A pose of the camera or radar used to take the third image may be estimated based on the partial 3DPC at **656.**

A new partial 3DPC may be determined based on feature data of the third training image and the partial 3DPC **658.** In particular, positions of any new features relative to the partial 3DPC may be estimated using matching data associated with the third training image and matching data associated with the first and second training images.

A graph optimizer may be used on the partial 3DPC and used training images at 660. In particular, the partial 3DPC may be updated using a graph optimizer to refine the estimated positions of features or subset of features, to refine the recovered camera- or radar-based pose or a subset of the camera- or radar-based poses, or to refine both feature positions and poses.

A graph optimizer may also be described as bundle adjustment, which is typically referred to as a specific application of graph optimization. The graph optimizer may be based on a mathematical data science technique, similar to least squares regression, but applied to a more connected data structure. The map points may define a graph such that points in the 3DPC are connected to a two-dimensional image space. The connections between 3D and 2D points form graph edges. The optimization problem may assume that some of the information is imperfect and may assume that the most likely location of the graph nodes (e.g., point coordinates for the 3DPC and the vision-based poses) can be determined or estimated based on all the available information. In other words, the graph optimizer recognizes that the generated 3DPC may be "noisy" and finds a "best fit" 3DPC based on all the available information.

If there are additional unused training images available at **662,** an additional unused training image with overlapping correspondence with the partial 3DPC may be selected at **654.** Poses and positions for each of the additional training images may continue to be estimated at **656, 658.** A graph optimizer may continue to be run on the estimated positions of features and unused training images at **660.**

If no unused training images are available at **662,** the partial 3DPC may represent a full 3DPC. The visual map building method may end at **664** and store the 3DPC and pose data in the data structure **532.**

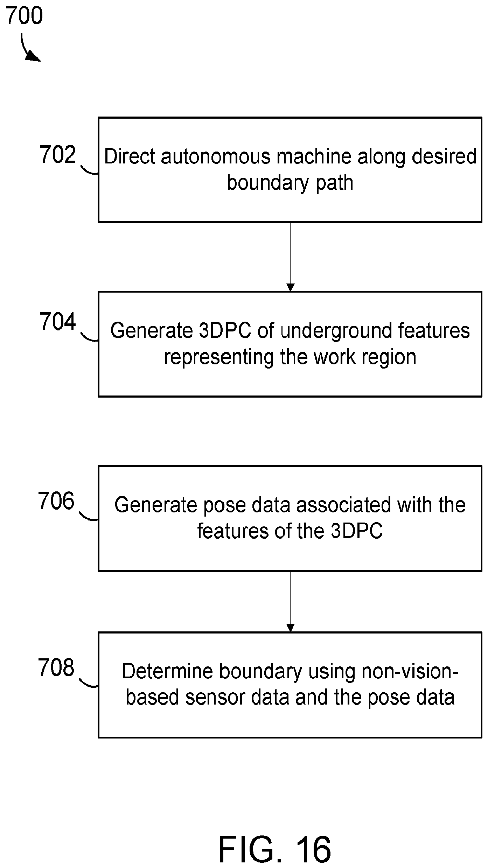

In **FIG. 16****,** a schematic representation of an autonomous machine navigation method **700** for training is shown. In a training mode, the autonomous machine may be directed along a work region, for example, along a desired boundary path of the work region at **702.** While the autonomous machine is directed in training mode, training images may be captured by an underground penetrating radar of the vision system on the autonomous machine. The autonomous machine may be directed manually or automatically along the desired boundary path. The machine may also be directed along a path offset from the desired boundary path, for example, by a predefined distance.

In an offline mode, a 3DPC may be generated that represents the work region and/or an area beyond or surrounding the work region at **704.** For example, the 3DPC may also include points outside of the boundary of the work region (e.g., when the boundary is defined within the work region) or even outside of the work region visible from within the work region. The 3DPC may be generated based on feature data containing two-dimensional features extracted from training images captured using the underground penetrating radar. The 3DPC may also be generated based on matching data relating features in the feature data from different training images.

Pose data may be generated and associated with points of the 3DPC including underground features that represents poses of the autonomous machine at **706.** The pose data may be described as vision-based pose data. The pose data may include both position and orientation representing the position of the radar or autonomous machine during training mode. In some embodiments, the pose data includes at least a three-dimensional position representing a pose of the autonomous machine during a training mode. The pose of the ground penetrating radar may be used to estimate the position of the autonomous machine.

A navigation system of the autonomous machine may be used to determine a boundary using non-vision-based sensor data and the pose data associated with the 3DPC at **708.** The boundary may be used for subsequent navigation of the autonomous machine in the work region, for example, during an online mode. Non-vision-based sensor data may be obtained, for example, from an inertial measurement unit. The vision-based pose data associated with the 3DPC may be used to estimate or correct the boundary.

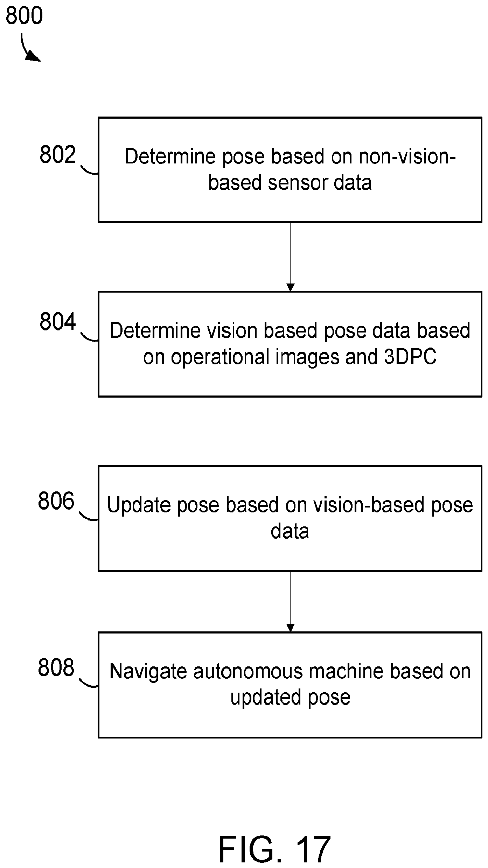

In **FIG. 17****,** a schematic representation of an autonomous machine navigation method **800** for operation is shown. In an online mode, a navigation system of the autonomous machine may be used to determine a pose of the autonomous machine based on non-vision-based sensor data at **802.** For example, sensor data may be based on the output of an inertial measurement unit.

A vision system of the autonomous machine may be used to determine vision-based pose data based on received operational images obtained and a 3DPC generated based on feature data extracted from training images at **804.** The vision-based pose data may be determined independently of the non-vision-based sensor data. In some embodiments, the vision-based pose data may be determined based at least in part on feedback from vision-based pose estimation or vison-based pose filtering.

The navigation system may update the predetermined pose based on the vision-based pose data at **806.** The vision-based pose data may be updated at a slower rate than the rate at which the navigation system updates the pose. That is to say that the pose may be determined one or more times without input, or correction, from the vision-based pose data.

The navigation system may navigate the autonomous machine within a boundary of the work region based on the updated pose at **808.** For example, the navigation system may be used to provide propulsion commands to a propulsion system of the autonomous machine.

Any suitable technique may be used to train the autonomous machine for navigation. In one or more embodiments described herein, training methods of the autonomous machine may include one, two, or more different phases. The machine may also, during training, transition to a different mode, such as an offline mode, between different phases of the training mode. Further, before beginning various phases of the training mode, the autonomous machine may perform a battery check before beginning, which may ensure that the machine is capable of performing the tasks needed during each phase.

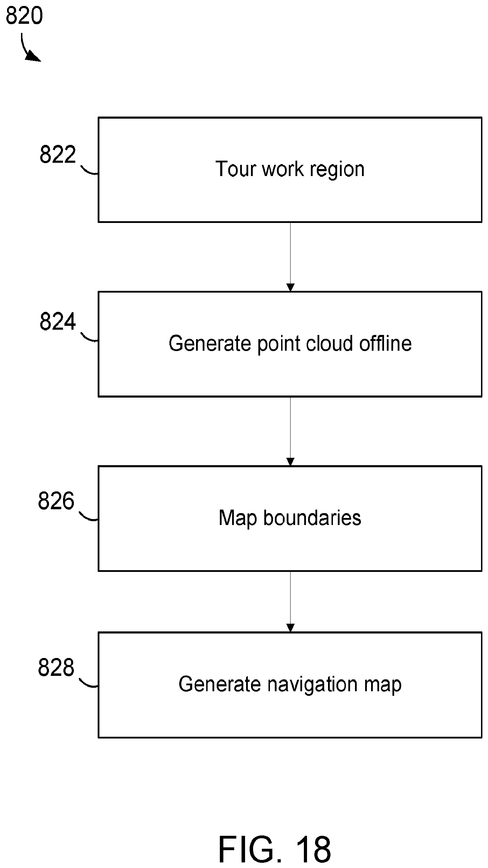

**FIG. 18** shows one example of different phases used in a training method **820.** In particular, the 3DPC and the boundaries may be trained in different phases, for example, compared to training method **700** of **FIG. 16****,** which may train the 3DPC and the boundaries in a single phase. The training method **820** may include a touring phase at **822,** in which the work region is toured by directing the autonomous machine in the work region. Images and other sensor data may be recorded during the touring phase.

The training method **820** may also include an offline phase at **824,** in which the autonomous machine generates a 3DPC, for example, in an offline mode while docked in a base station. The point cloud may be generated using the images and other sensor data recorded during the touring phase.

Further, the training method **820** may include a mapping phase at **826,** in which the autonomous machine is directed in the work region according to desired boundaries. The machine may be directed manually, which may include being pushed or driven by the user or being controlled remotely. Images and other sensor data may be recorded during the touring phase. For example, sensor fusion data may be used to determine the location of the autonomous machine along the paths.

Once the boundaries have been mapped, the training method **820** may include a map generation phase at **828,** in which the autonomous machine generates a navigation map. The map generation phase at **828** may include generating the navigation map based on sensor fusion data recorded during the mapping phase. The navigation map may include some or all the boundaries trained by the user in the mapping phase.

The map generation phase at **828** may include generating a representation of one or more paths traversed by the autonomous machine during the mapping phase. For example, the representation of the one or more paths may be a visual representation displayed to the user on a user interface device. In some embodiments, a user interface device may be coupled to the autonomous machine for the touring phase or the mapping phase. One example of a user interface device is a smartphone, which may be physically docked with or coupled to the autonomous machine in a position that is visible to the user or may be operably connected by wireless or wired connection to the autonomous machine for remote operation of the machine.

In some embodiments, the one or more processes of the training method **820** may be repeated even after the navigation map has been tested and used for autonomous navigation. For example, a user may want to change one or more boundaries in response to physical changes in the work region (e.g., adding an exclusion zone with the addition of a flower bed to a yard) or changes in preference that may change over time. In such embodiments, the autonomous machine may be configured to repeat one or more of the touring phase at **822,** the offline phase at **824,** the mapping phase at **826,** and the map generation phase at **828.** For example, in some embodiments, only the mapping phase at **826** and the map generation phase at **828** may be repeated if the 3DPC does not need to be updated or regenerated.

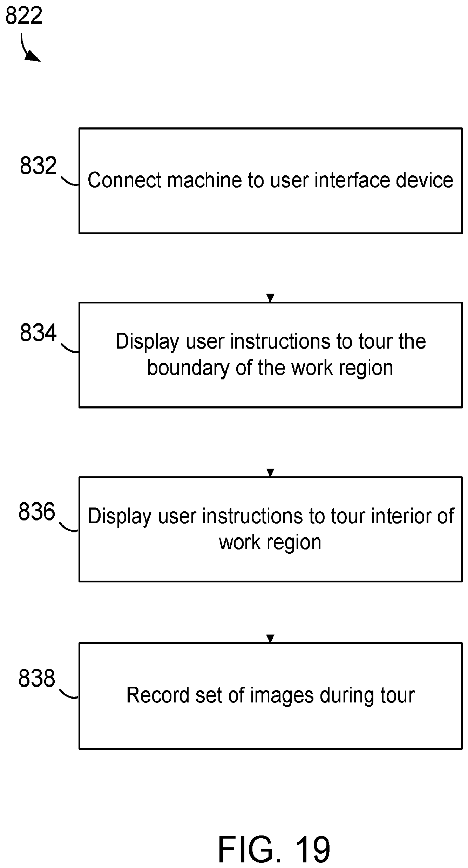

**FIG. 19** shows one example of the touring phase **822** that may be used in the overall training method **820.** The touring phase **822** may include connecting the autonomous machine to the user interface device at **832.** The touring phase **822** may also include instructing the user to tour various parts of the work region. As illustrated, the touring phase **822** may include displaying user instructions to the boundary of the work region at **834.** The boundary of the work region may correspond to a perimeter, such as the outer perimeter, of the work region. This process allows the user to define the extent of the work region.

The touring phase **822** may also include displaying user instructions to tour the interior of the work region at **836.** Touring the interior of the work region may provide images that may be processed to identify features for building a 3DPC. In one example, touring the interior of the work region may correspond to the autonomous machine being directed in a raster pattern to roughly cover a variety of areas of the work region. The raster pattern may not completely cover the entire work region.

The touring phase **822** may include recording a set of images during the tour at **838,** for example, as the autonomous machine is directed along in the work region. The machine may be directed as instructed to the user. The recorded set of images may be processed to identify features. Non-vision-based sensor data, such as wheel encoder data or IMU data, may also be recorded during the touring phase **822.**

In some embodiments, the touring phase **822** may include touring the perimeter, touring the interior, or both touring the perimeter and the interior. Touring the interior may only be requested, for example, when the features identified in the images recorded during touring of the perimeter are insufficient to build a robust 3DPC for autonomous navigation.

In other embodiments, the perimeter and the interior may be toured regardless of the results of the perimeter touring. Sets of images for the perimeter and the interior may be recorded in the same session or in different sessions. For example, both sets of images may be recorded without an offline phase between them. Each set of images may include one or more images captured by the vision system of the autonomous machine.

**FIG. 20** shows one specific example of a method **870** that may be used to carry out at least part of the method **820.** The method **870** may include generating an underground 3DPC at **824,** which may be performed after a touring phase. The underground 3DPC may be analyzed, and a determination may be made regarding whether the underground 3DPC includes any low-quality portions at **844.** If the one or more low-quality portions are insufficient or unacceptable for navigation based on the underground 3DPC, the method **870** may include performing an autonomous or manual supplemental training run to improve feature-density in the low-quality portions identified.

In some cases, the underground 3DPC may be insufficient for navigation if the quality level of the 3DPC does not meet a quality threshold. The presence of one, two, or more low-quality portions may be enough to determine that the quality level of the underground 3DPC is insufficient. In some embodiments, the method **870** may include determining that the underground 3DPC is sufficient for navigation even when one or more low-quality portions are present. For example, the mower may use non-low-quality portions of the underground 3DPC near the low-quality portions for position correction or updating during navigation. Further, the autonomous machine may use images during other training modes or operation to improve the underground 3DPC periodically without performing a dedicated supplemental training run.

The method **870** may include displaying user instructions to place underground markers at **846.** In some embodiments, the user instructions may be displayed on a smartphone of the user. The markers, or targets, may be discernable by sensor data. For example, the markers may be visible to the vision system, and the vision system may identify one or more artificial features of the underground marker for use in generating an underground 3DPC. The markers may be temporarily or permanently placed in the work region for future navigation. In some embodiments, the underground markers are permanently placed in the subsurface below the ground surface and are visible using ground penetrating radar. In some embodiments, surface or minimally subsurface markers may be placed in addition to, or as an alternative to, the underground markers. One or more markers may be made of metal (e.g., a metallic object). For example, a feature may be a synthetic or artificial metallic object, such as a nail.

Generally, the markers or targets may provide a return signal in response to a wireless signal transmitted to a markers or targets that passively provide the return signal. For purposes of this disclosure, "passively" refers to the power for the return signal being provided from transmitted wireless signal, e.g., without the aid of electrical power being applied to the markers or targets. This may include passive RFID devices that use the wireless signal to temporarily energize a circuit that then retransmits a stored code or signal that can be uniquely associated with the RFID device. In other embodiments, the markers or targets could be metallic or multilayer objects that are tailored (e.g., via material selection, geometry, etc.) to provide an identifiable response such that the return signal being identifiable with the object

In some embodiments, the markers or targets can be used together with or instead of the aforementioned vision-based pose data to update the current pose to correct or localize the current pose and to provide an updated pose of the autonomous machine in the work region for navigating the autonomous machine in the work region.

In some embodiments, the base station may include or deploy underground markers in its proximity for use in localizing and aiding in the docking of the mower. Additionally, or alternatively, markers may be used to aid the transporting of the mower between navigational landmarks, such as gates or narrow areas, and may be used to indicate other locations or zones, such as pick up locations. In some embodiments, markers may be arranged in a unique and identifiable pattern by the mower. For example, multiple markers may be arranged into a line as a unique pattern.

In some embodiments, one or more markers may have a unique and identifiable shape, such as a geometric square, triangle, etc. Such markers may further facilitate localization. Markers may also be used to identify a relationship to other subsurface objects, such as sprinkler heads. In one example, a marker may be placed on a sprinkler head. The marker may be triangular, which may be used for identifying sprinkler heads in the work region. In further embodiments, markers may include wireless identification techniques, such as RFID or other suitable techniques identifiable by the mower having a suitable communication interface.

The markers may be in place during the touring phase, such that marker data (e.g., signature or other identifying traits, location within the 3DPC) may be recorded while the work region is toured. For example, if RFID tags are used as markers, each tag may have a unique ID that allows the autonomous machine to associate the ID with a particular location. For other markers such as pegs, rock, sprinkler heads, etc., a unique signature may be developed. Such signature may be based on vision processing as described above, or may be based on a particular response of the object to an applied signal, e.g., frequency response, polarization response, etc.

Wirelessly-read markers may provide at least an indication of proximity to a previously determined location within some confidence range. For example, an RFID tag may have an activation distance that varies based on the frequencies used, e.g., from 0.5 inch to 10 feet or more. In an outdoor autonomous vehicle application, the range may be at the lower end due to proximity of the tag to the ground, coverings such as rain, snow, etc. that can suppress both the activation and return signals. If the known activation range of a particular RFID tag is 1-4 inches, for example, then the autonomous machine can estimate that it is within 1-4 inches of the location associated with that tag when detecting its response signal.

Depending on the configuration of the RFID transceiver, the detection of the response signal may not provide an indication which direction the RFID tag is located relative to the autonomous machine. In some embodiments where non-imaging type sensors are used, the direction of the marker relative to a reference point on the autonomous machine may be estimated using multiple sensors. For example, the autonomous machine may have two or more receivers at different locations (e.g., left and right sides) that can provide a rough indication of direction by which receiver has the strongest signal. In other embodiments, multiple receiver signals can be used to triangulate a direction of the marker using techniques known in the art.

The autonomous machine may be directed along the low-quality portions identified at **848.** The machine may be directed autonomously, using sensor fusion to navigate non-low-quality portions of the work region, or manually by the user, which may be done physically or using a remote control. As the machine is directed along the work region, a new set of touring images may be recorded to capture features, which may be artificial features, in the low-quality portions identified at **850.**

In response to the new set of touring images have been recorded, the machine may return to the docking station for offline mode. During offline mode, the method **870** may include regenerating the underground 3DPC based on the new set of touring images at **852.** The processes to remedy the low-quality portions of the underground 3DPC may be repeated if needed.

In some embodiments, a new set of touring images may be recorded repeatedly, or periodically, and the underground 3DPC may be regenerated alternatively or in addition to detecting low-quality portions. The repeated recorded of a new set of touring images may be used to adjust the underground 3DPC and navigation map to seasonal variations or other changes in the work region. For example, a new set of touring images may be set to be recorded four times per year or once per local season.

The method **870** may include performing processes to define specific boundaries within the work region at **826.** In some embodiments, defining specific boundaries may be performed after determining that the underground 3DPC is acceptable or sufficient for generating the underground 3DPC or in response to one or more low-quality portions of the underground 3DPC being remedied. The method **870** may include displaying user instructions to direct the machine for boundary training at **854.** The user may select or be instructed to train various types of boundaries, such as an exclusion zone, a transit zone, or a containment zone. One or more of these boundaries may be trained by directing the autonomous machine along one or more paths representing these boundaries. The autonomous machine may be directed by the user manually, which may be done physically or using remote control.

As the machine is directed, mapping images and other sensor fusion data may be recorded at **856.** In particular, the machine may record sensor fusion data, which can use non-vision-based sensor data to determine a position, which may be localized or corrected using vision system data and the underground 3DPC, particularly using GPR data. In particular, the position may be localized to the coordinate system defined by the underground 3DPC.

The method **870** may include displaying a representation of the one or more paths traversed by the machine before boundaries are defined. In one example, a rough shape of the path traversed by the machine may be displayed to the user on a user interface device, such as a smartphone, before the related boundaries are defined. In some embodiments, after the machine traverses a path for each boundary, a visual representation may be compiled and shown, and the user may confirm that the representation is acceptable before proceeding to train the next boundary.

Various techniques may be used to compile the rough shape shown to the user. In some embodiments, the rough shape may be generated based on a raw position of the autonomous machine determined by sensor fusion data. The positions of the wheels of the autonomous machine may be determined from sensor fusion data and used to define the rough shape. In particular, the wheels may be used as the vertices of a trapezoidal shape that is used to "paint" the path of the machine. In some embodiments, the raw position data may be smoothed for use in generating the representation.

In one or more embodiments, the visual representation associated with each path may be based on an outer perimeter of the respective path. For example, a user may direct the machine into a corner of the work region and move the machine back and forth to turn the machine while covering the edges of the work region near the corner. Instead of showing all of the back and forth motion in the visual representation, the outer perimeter of the machine's path is shown as the rough shape.

The method **870** may include generating a navigation map at **828,** for example in an offline mode. The navigation map may define the one or more trained boundaries. The navigation map may be generated and stored separately from the 3DPC. The coordinate system of the navigation map may be localized to the coordinate system of the 3DPC, for example, when sensor fusion data is used to generate the boundaries. The navigation map may be generated as a 2D or 3D representation of the boundaries of the work region. The navigation map may be generated during the map generation phase of the training mode or during an offline mode. In some embodiments, the navigation map may be displayed to the user, including the trained boundaries, via the user interface device. The trained boundaries may appear differently to the user than the visual representations of the paths due, for example, to localization or correction using the vision-based sensor data and the 3DPC.

The navigation map may be used for operation of the autonomous machine within the work region. In some embodiments, the method **870** may include testing the navigation map before using the navigation map to operate the autonomous machine at **862** after generating the navigation map. For example, the machine may autonomously traverse the paths or trained boundaries. If the test is successful, the navigation map may be used for autonomous operation of the machine in the work region, for example, to perform mowing tasks in the work region. The 3DPC or boundaries may be retrained or redefined as needed.

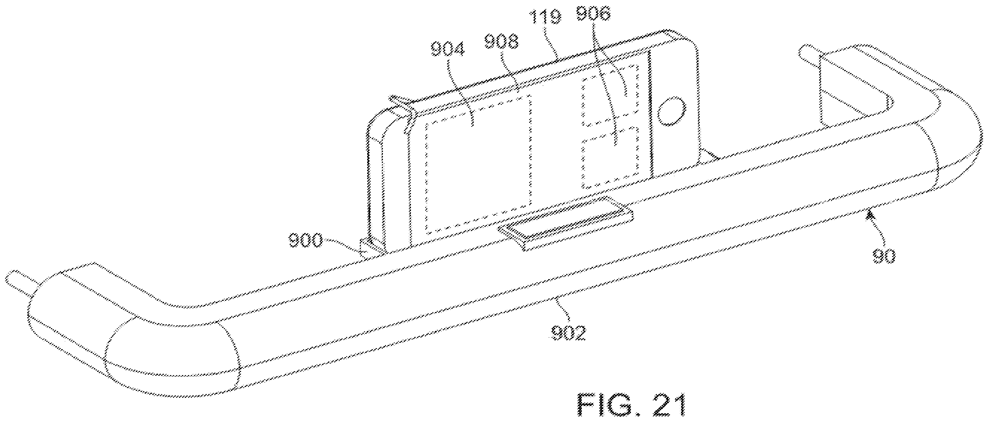

**FIG. 21** shows one example of the handle assembly **90.** In some embodiments, a cradle **900** may be attached to the grip portion **902** of, and be part, of the handle assembly **90.** The cradle **900** may be adapted to receive and hold the mobile device **119** (e.g., smartphone) in an orientation visible to the operator while standing or walking behind the housing (when the handle assembly is in the manual mode position). The mobile device **119** may support a communication protocol compatible with a radio **117** (**FIG. 1**) of the mower **100** for reasons further described below. Alternatively, the mower **100** and cradle **900** may include provisions for a wired connection (e.g., serial, Universal Serial Bus, etc.) to the controller **120** (**FIG. 1**) of the mower **100.** Regardless of the control interface provided to the operator, he or she may control and manipulate the mower by interacting with controls associated with the handle assembly **90** (e.g., with virtual controls on the mobile device).

In order to operate autonomously, the boundaries of the work region is trained and stored in the mower **100.** While various boundary detection systems are known, mowers in accordance with embodiments of the present disclosure may determine the bounds of the work region by initially undergoing a training procedure or phase as described in more detail below. In the training mode, the mower is configured in the manual mode in which the handle assembly may be in a manual ode position.

The cradle **900** may receive therein a mobile device **119** (e.g., smartphone) that supports a communication protocol (wired or wireless) compatible with the radio **117** of the mower **100.** For example, the mobile device **119** may support short-range wireless communication via the Bluetooth wireless protocol. The controller **120** may communicate with the mobile device **119** to present various controls and operator feedback in the training mode of the mower as further described below.

To enter the training mode, the handle assembly **90** may (if not already in position) first be deployed or moved from the first or autonomous mode position to the second or manual mode position. After the handle assembly is in place, the mobile device **119** may be placed in the cradle **900** as described above. The operator may then initiate communication between the mobile device **119** and the controller **120.** This initiation may involve pairing or otherwise connecting the mobile device **119** to the mower **100** so that the two devices may wirelessly communicate with one another. While described herein as wireless communication (e.g., Bluetooth), alternate embodiments could again provide a wired interconnection. The operator may then launch application-specific software on the mobile device that presents status information **904** to the operator in the training mode. The software may further permit the operator to issue commands during the training process via inputs provided by virtual buttons **906** that appear on the display **908.** For example, the application may allow the operator to, among others, issue commands and receive instructions directed to: entering the training mode; starting/stopping recording of data related to the traversal of a boundary of a work region, an exclusion zone, or a transit zone; and when to push or drive the mower along an identified boundary or path.

When the operator is ready to initiate the training mode, the mower may be pushed, using the handle assembly **90,** to a perimeter of the work region (or to a perimeter of an exclusion zone). At this point, training may begin by selecting the appropriate training mode (e.g., a boundary training mode for the work region or an exclusion zone, or a transit zone training mode) presented on the display **166.** In the case of the boundary training mode, the operator may then commence to traverse the boundary of the work region.

During the boundary training mode, the mower **100** may record data associated with the boundary as the mower traverses the boundary. The mower **100** may further (via the application software running on the mobile device **119)** present various status information (see, e.g., **904)** of the training mode to the operator during traversal/training. For instance, the display **908** may plot, in real-time, zone coordinates of the mower during perimeter recording. In addition, the display **908** may present instructions requesting that the operator change (e.g., reduce) mower speed. Maintaining mower speed below a threshold during training may be important, especially for vision-based systems, to ensure that the mower is able to capture sufficient data.

Such speed-related instructions/feedback may be presented textually or graphically to the operator. For example, feedback and/or other status information may be presented as a quantitative speed indicator (e.g., speedometer), or a speed-related icon or object (e.g., an icon that changes color: green for acceptable speed, yellow or red for unacceptable speed). In other embodiments, the display **908** could indicate whether a change in speed is needed by showing a speedometer reading alongside a desired target speed or showing "up" or "down" arrows to indicate a faster or slower speed is recommended. In yet other embodiments, the display could provide a simplistic "pass/fail" indicator or provide audible indicators (via the mobile device **119** or the mower/controller) during or after the training mode.

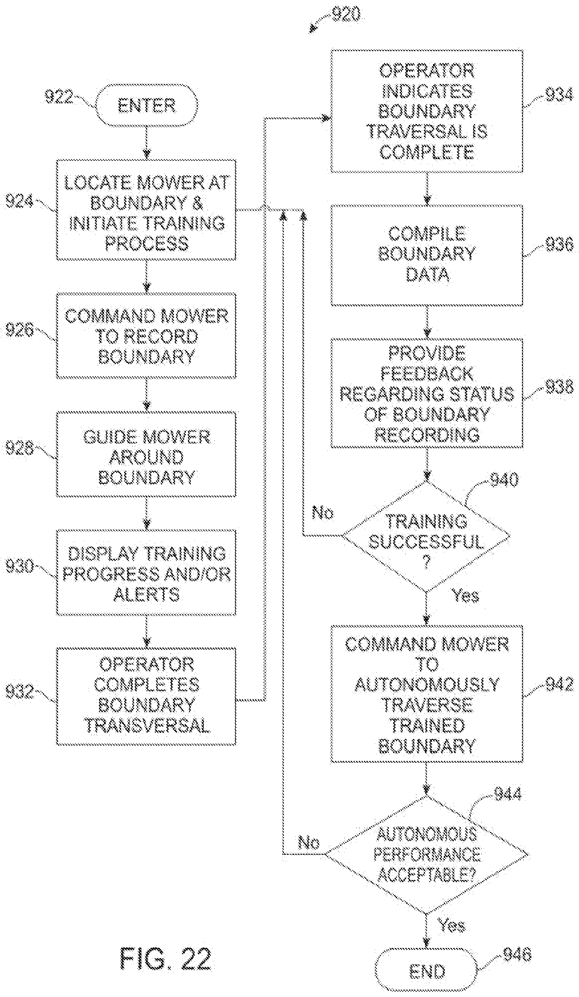

**FIG. 22** illustrates an exemplary method **920,** or process, for training the mower **100 (****FIG. 1****)** with regard to boundaries. In some embodiments, method **920** may be part of the mapping phase of the training mode. It is noted that this process describes only an exemplary boundary training method. It is understood that other operations may need to occur before or after the method **920** in order to permit autonomous operation of the mower. However, these other operations are not specifically addressed herein. The operator may first train a boundary of the work region, and then proceed to train exclusion zones and transit zones. This method assumes that the mower **100** is positioned at or near a boundary of a work region or at or near a boundary of one of the exclusion zones. The method **920** will be described in the context of training the boundary of the work region, but the method would apply, with slight variation, to the exclusion zone boundaries or transit zone boundaries or paths, as well.

The method **920** is entered at **922.** Once the mower **100** is located along the boundary, the training mode or mode may be initiated at **924.** Initiating training may include deploying the handle (e.g., moving the handle to the manual mode position as described herein), locating the mobile device **119 (****FIG. 1****)** in the cradle **900 (****FIG. 21****)** and interacting with the software running on the mobile device. Once initiated, the operator may select whether the boundary to be trained is a work region boundary, an exclusion zone boundary, or a transit zone boundary or path.

The operator may command the mower, for example, via interaction with the display **166 (****FIG. 21****)** of the mobile device **119** to record mower movement at **926** as the mower traverses the boundary. Once recording is initiated, the mower **100** may utilize a variety of sensors (e.g., GPS, wheel encoders, vision systems, lidar, radar, etc.) to record its travel path as the mower **100** is manually guided, pushed, or driven around the boundary. In some embodiments, the mower may provide an assistive torque to the rear wheels **106 (****FIG. 1****)** to assist the operator as the mower is guided around the boundary. Moreover, the cutting blade **110 (****FIG. 1****)** could be either active or inactive in the training mode. Activating the cutting blade **110** during training could provide feedback as to the actual cutting path the mower will make as it is guided about the boundary. If cutting blade **110** actuation is allowed, it may be controlled by an option presented on the display **166** during training. Such operation may necessitate the use of operator presence controls (e.g., on the handle itself or on the display **166** of the mobile device **119).**

Because a cutting width of the mower **100** may be narrower than the width of the housing **102 (****FIG. 1****),** the top of the housing **102** may include visual markings that indicate to the operator the cutting width of the mower. Such markings may be useful to the operator when the blade **110** is unpowered in the training mode.

As the mower is pushed, guided, or driven around the boundary, the mower **100** (for example, via the display **166)** may optionally indicate to the operator training status and/or training alerts at **930.** For example, the controller **120** may graphically or audibly recommend slowing ground speed to improve data capture.

Once the operator and mower have completed traversal of the boundary (e.g., moved slightly beyond the original starting point) at **932,** the operator may indicate (e.g., via the mobile device) that boundary traversal is complete at **934.** The controller **120** and/or the mobile device **119** may then compile the boundary data collected to ultimately create a mapped boundary path of the work region (or exclusion zone or transit zone or path) at **936.**

The mower may provide (via an onboard display or via the mobile device **119)** feedback regarding status of the training process (e.g., status of boundary recording) at **938.** For example, at completion, the mower **100** may provide an indication on the mobile device that the boundary training was successful (e.g., the data satisfies predetermined path criterion or criteria) by displaying a status such as a simple "pass/fail" indication at **938.** Path criteria that may affect training success includes determining whether the mapped boundary path defines a bounded area (e.g., forms an enclosed or bounded area or shape). Other path criteria may include determining whether bottlenecks are present. A bottleneck may exist, for example, when a mapped boundary path of the work region is within a threshold distance of an object or another mapped boundary path (e.g., the boundary is too close - such that a path width is insufficient for the mower to easily pass - to another boundary path.

If the training is successful at **940,** the operator may move the handle assembly to the first or autonomous mode position and command the mower **100** to autonomously traverse the trained boundary of the work region (and/or exclusion zones or transit zones or paths) at **942.** Assuming the operator concludes that the trained paths are acceptable at **944,** the method ends at **946.** If, on the other hand, it is determined that training was unsuccessful at **940,** or the operator finds autonomous operation to be unacceptable at **944,** the method may return to **924** and training (or a portion thereof) reexecuted. The method may then be repeated for each boundary (including exclusion zones) and transit zones. In some embodiments, the software running on the mobile device **119** may permit the operator to revise, add, and/or delete some or all of a boundary or portion thereof during the method **920.**

In addition to containment/exclusion zone training, the mower **100** may also be trained to utilize one or more "return-to-base" transit zones ("RTB transit zones") using the handle assembly **90** in the manual mode position. That is, the mower **100** may also be trained as to what path or paths it should use to return to the base station **258 (****FIG. 3****).** Training RTB transit zones may be useful to assist or expedite the mower's return to the base station to, for example, account for complex yards, or to otherwise allow the operator to constrain the mower's preferred return path. Any number of RTB transit zones may be trained. During autonomous operation, the mower **100** may guide itself to the nearest RTB transit zone and then follow that path to the base station **258** when operation is complete or the mower battery needs re-charging. Of course, to permit RTB transit zone training, the mower/controller may also permit the operator to establish or otherwise train a "home" location of the base station **258.**

Before autonomous mowing may take place, the yard or work region may be mapped. Yard mapping involves defining the mowing area (e.g., work region perimeter), defining all exclusion zones, identifying the "home" position for the base station **258,** and optionally identifying transit zones.

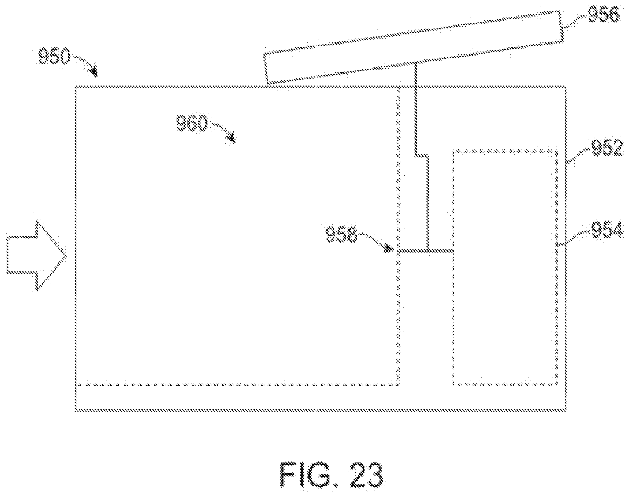

**FIG. 23** shows one example of a base station that may be used as the base station **258 (****FIG. 3****).** As illustrated, the base station **950** includes a housing **952** defining a storage location **960** for the mower **100.** Charging connections **958** may be exposed to the storage location **960** for the mower **100** to connect for recharging. The base station **950** may include a solar panel **956** coupled to the housing **952** and operably coupled to the charging connections **958.** Energy generated by the solar panel **956** may be used to recharge the mower **100** directly or indirectly. The solar panel **956** may be coupled to the charging connections **958,** to an optional battery **954,** or to both. In some embodiments, the solar panel **956** may directly charge the mower **100** through charging connections **958** during the daytime. In some embodiments, the solar panel **956** may indirectly charge the mower **100** by charging the battery **954** during the daytime, which is used to charge the mower **100** through charging connections **958** during the daytime or the nighttime.

The base station **950** may optionally be coupled to an external power source, such as a building electrical outlet. The base station **950** having the solar panel **956,** the battery **954,** or both may continue to operate even when an external power source is not available (e.g., due to power loss).

In some embodiments, the base station **950** is not plugged in to an external power source and does not power a boundary wire to facilitate defining a boundary. The mower **100** may continue to operate and navigate even when the base station **950** loses all power from any of the sources, such as solar panel **956** or the battery **954,** for example, when navigation does not rely upon a boundary wire powered by the base station **950.** In other embodiments, the base station **950** may power a boundary wire and be plugged into an external power source.

## Claims

1. A method for autonomous machine navigation comprising:
determining a current pose of an autonomous machine (100) based on first pose data captured by a first sensor of the autonomous machine, wherein the pose represents a position and an orientation of the autonomous machine in a work region (200) defined by one or more boundaries;
transmitting a wireless signal to a subsurface object (154);
receiving, at a second sensor of the autonomous machine, a wireless return signal that is provided by the subsurface object in response to the wireless signal, the wireless return signal uniquely identifiable with the subsurface object;
determining second pose data based on the wireless return signal; and
updating the current pose based on the second pose data to provide an updated pose of the autonomous machine in the work region for navigating the autonomous machine in the work region.

2. The method of claim 1, wherein the subsurface object (154) comprises a radio frequency identification (RFID) tag.

3. The method of claim 2, wherein the RFID tag retransmits a stored code or signal that is uniquely associated with the RFID tag.

4. The method of claim 2 or 3, wherein the RFID tag has an activation distance of 0.5 inch (1.27 cm) to 10 feet (304.8 cm), preferably 1 inch (2.54 cm) to 4 inches (10.16 cm), wherein the second pose data estimates a location of the autonomous machine (100) to within the activation distance.

5. The method of claim 1, wherein the subsurface object (154) has a passive signal response to an excitation signal that is uniquely identifiable with: the subsurface object; and with a previously known location of the subsurface object.

6. The method of claim 5, wherein the signal response includes an identifiable peak frequency.

7. The method of claim 5 or 6, wherein the signal response includes an identifiable polarization response.

8. The method of any one of claims 5-7, wherein the subsurface object (154) comprises a multilayer object that is tailored via one or more of material selection or geometry to provide the uniquely identifiable signal response.

9. The method of any preceding claim, wherein the second sensor comprises two or more receivers at different locations on the autonomous machine (100) to estimate the direction of the subsurface object (154) relative to a reference point on the autonomous machine.

10. The method of claim 9, wherein the two or more receivers are at different sides of the autonomous machine (100), the direction estimated by which of the two or more receivers has a strongest signal.

11. The method of claim 9, wherein the two or more receivers are used to triangulate a direction of the subsurface object (154).

12. The method of any preceding claim, wherein the work region (200) is a lawn and the autonomous machine (100) is a lawn maintenance machine.

13. The method according to any preceding claim, wherein the first sensor comprises a camera (133) and the current pose is determined based on features detected in image data captured by the camera.

14. The method according to any preceding claim, wherein the first sensor comprises one or more of an inertial measurement unit (470), a wheel encoder (472), and a global positioning satellite receiver (116).

15. An autonomous machine (100) operable to carry out a method according to any one of the preceding methods.

## Patentansprüche

1. Verfahren zur autonomen Maschinennavigation, das umfasst:
Bestimmen einer aktuellen Pose einer autonomen Maschine (100) basierend auf ersten Pose-Daten, die von einem ersten Sensor der autonomen Maschine erfasst werden, wobei die Pose eine Position und eine Orientierung der autonomen Maschine in einem Arbeitsbereich (200) darstellt, der durch eine oder mehrere Grenzen definiert ist;
Übertragen eines drahtlosen Signals an ein unterirdisches Objekt (154);
Empfangen, an einem zweiten Sensor der autonomen Maschine, eines drahtlosen Rücksignals, das von dem unterirdischen Objekt als Reaktion auf das drahtlose Signal bereitgestellt wird, wobei das drahtlose Rücksignal eindeutig mit dem unterirdischen Objekt identifizierbar ist;
Bestimmen von zweiten Pose-Daten basierend auf dem drahtlosen Rückkehrsignal; und
Aktualisieren der aktuellen Pose basierend auf den zweiten Pose-Daten, um eine aktualisierte Pose der autonomen Maschine in dem Arbeitsbereich zum Navigieren der autonomen Maschine in dem Arbeitsbereich bereitzustellen.

2. Verfahren nach Anspruch 1, wobei das unterirdische Objekt (154) ein Hochfrequenz-Identifikations- (RFID) Etikett umfasst.

3. Verfahren nach Anspruch 2, wobei das RFID-Etikett einen gespeicherten Code oder ein Signal, das dem RFID-Etikett eindeutig zugeordnet ist, zurücksendet.

4. Verfahren nach Anspruch 2 oder 3, wobei das RFID-Etikett eine Aktivierungsdistanz von 0,5 Zoll (1,27 cm) bis 10 Fuß (304,8 cm), vorzugsweise 1 Zoll (2,54 cm) bis 4 Zoll (10,16 cm) aufweist, wobei die zweiten Pose-Daten einen Standort der autonomen Maschine (100) innerhalb der Aktivierungsdistanz schätzen.

5. Verfahren nach Anspruch 1, wobei das unterirdische Objekt (154) eine passive Signalantwort auf ein Anregungssignal aufweist, die eindeutig identifizierbar ist mit: dem unterirdischen Objekt; und mit einem zuvor bekannten Ort des unterirdischen Objekts.

6. Verfahren nach Anspruch 5, wobei die Signalantwort eine identifizierbare Spitzenfrequenz aufweist.

7. Verfahren nach Anspruch 5 oder 6, wobei die Signalantwort eine identifizierbare Polarisationsantwort enthält.

8. Verfahren nach einem der Ansprüche 5-7, wobei das unterirdische Objekt (154) ein mehrschichtiges Objekt umfasst, das durch eine oder mehrere Materialauswahlen oder Geometrien angepasst ist, um die eindeutig identifizierbare Signalantwort zu liefern.

9. Verfahren nach einem der vorhergehenden Ansprüche, wobei der zweite Sensor zwei oder mehr Empfänger an verschiedenen Orten auf der autonomen Maschine (100) umfasst, um die Richtung des unterirdischen Objekts (154) relativ zu einem Referenzpunkt auf der autonomen Maschine zu schätzen.

10. Verfahren nach Anspruch 9, wobei sich die zwei oder mehr Empfänger an verschiedenen Seiten der autonomen Maschine (100) befinden, wobei die Richtung dadurch geschätzt wird, welcher der zwei oder mehr Empfänger das stärkste Signal aufweist.

11. Verfahren nach Anspruch 9, wobei die zwei oder mehr Empfänger zur Triangulation einer Richtung des unterirdischen Objekts (154) verwendet werden.

12. Verfahren nach einem der vorhergehenden Ansprüche, wobei der Arbeitsbereich (200) ein Rasen ist und die autonome Maschine (100) eine Rasenpflegemaschine ist.

13. Verfahren nach einem der vorhergehenden Ansprüche, wobei der erste Sensor eine Kamera (133) umfasst und die aktuelle Pose anhand von Merkmalen bestimmt wird, die in von der Kamera erfassten Bilddaten erfasst werden.

14. Verfahren nach einem der vorhergehenden Ansprüche, wobei der erste Sensor eines oder mehrere der Folgenden umfasst: eine Inertialmesseinheit (470), einen Radcodierer (472) und einen Satellitenempfänger (116) zur globalen Positionsbestimmung.

15. Autonome Maschine (100) zur Durchführung eines Verfahrens nach einem der vorhergehenden Verfahren.

## Revendications

1. Procédé de navigation de machine autonome comprenant :
la détermination d'une pose actuelle d'une machine autonome (100) sur la base de premières données de pose capturées par un premier capteur de la machine autonome, dans lequel la pose représente une position et une orientation de la machine autonome dans une région de travail (200) définie par au moins une limite ;
la transmission d'un signal sans fil à un objet souterrain (154) ;
la réception, au niveau d'un deuxième capteur de la machine autonome, d'un signal de retour sans fil qui est fourni par l'objet souterrain en réponse au signal sans fil, le signal de retour sans fil uniquement identifiable par l'objet souterrain ;
la détermination de deuxièmes données de pose sur la base du signal de retour sans fil ; et
l'actualisation de la pose actuelle sur la base des deuxièmes données de pose pour fournir une pose actualisée de la machine autonome dans la région de travail de navigation de la machine autonome dans la région de travail.

2. Procédé selon la revendication 1, dans lequel l'objet souterrain (154) comprend une étiquette d'identification radiofréquence (RFID).

3. Procédé selon la revendication 2, dans lequel l'étiquette RFID retransmet un code stocké ou un signal qui est associé de manière unique à l'étiquette RFID.

4. Procédé selon la revendication 2 ou 3, dans lequel l'étiquette RFID a une distance d'activation de 0,5 pouce (1,27 cm) à 10 pieds (304,8 cm), de préférence de 1 pouce (2,54 cm) à 4 pouces (10,16 cm), dans lequel les deuxièmes données de pose estiment un emplacement de la machine autonome (100) dans la distance d'activation.

5. Procédé selon la revendication 1, dans lequel l'objet souterrain (154) a une réponse de signal passive à un signal d'excitation qui est identifiable de manière unique avec : l'objet souterrain ; et avec un emplacement précédemment connu de l'objet souterrain.

6. Procédé selon la revendication 5, dans lequel la réponse de signal inclut une fréquence de crête identifiable.

7. Procédé selon la revendication 5 ou 6, dans lequel la réponse de signal inclut une réponse de polarisation identifiable.

8. Procédé selon l'une quelconque des revendications 5 à 7, dans lequel l'objet souterrain (154) comprend un objet multicouche qui est personnalisé par le biais d'au moins l'un parmi une sélection ou une géométrie de matériau pour fournir la réponse de signal identifiable de manière unique.

9. Procédé selon l'une quelconque des revendications précédentes, dans lequel le deuxième capteur comprend au moins deux récepteurs à des emplacement différents sur la machine autonome (100) pour estimer la direction de l'objet souterrain (154) par rapport à un point de référence sur la machine autonome.

10. Procédé selon la revendication 9, dans lequel les au moins deux récepteurs sont sur différents côtés de la machine autonome (100), la direction étant estimée par celui des au moins deux récepteurs ayant le signal le plus intense.

11. Procédé selon la revendication 9, dans lequel les au moins deux récepteurs sont utilisés pour trianguler une direction de l'objet souterrain (154).

12. Procédé selon l'une quelconque des revendications précédentes, dans lequel la région de travail (200) est une pelouse et la machine autonome (100) est une machine d'entretien de pelouse.

13. Procédé selon l'une quelconque des revendications précédentes, dans lequel le premier capteur comprend une caméra (133) et la pose actuelle est déterminée sur la base de caractéristiques détectées dans des données d'image capturées par la caméra.

14. Procédé selon l'une quelconque des revendications précédentes, dans lequel le premier capteur comprend au moins une unité de mesure d'inertie (470), un encodeur de roue (472), et un récepteur de positionnement mondial par satellite (116).

15. Machine autonome (100) capable de fonctionner pour réaliser un procédé selon l'un quelconque des procédés précédents.
